(19) Europäisches Patentamt
European Patent Office
Office européen des brevets

(11) **EP 4 704 481 A1**

(12) **EUROPEAN PATENT APPLICATION**
published in accordance with Art. 153(4) EPC

(43) Date of publication:
**04.03.2026 Bulletin 2026/10**

(21) Application number: **23934536.6**

(22) Date of filing: **27.04.2023**

(51) International Patent Classification (IPC):
**H04W 72/23** (2023.01)

(52) Cooperative Patent Classification (CPC):
**H04W 72/0446; H04W 72/23**

(86) International application number:
**PCT/CN2023/091184**

(87) International publication number:
**WO 2024/221339 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **WANG, Lei**
**Beijing 100085 (CN)**

(74) Representative: **Dehns Germany Partnerschaft mbB**
**Theresienstraße 6-8**
**80333 München (DE)**

(54) **COMMUNICATION PROCESSING METHOD AND APPARATUS AND READABLE STORAGE MEDIUM**

(57) The present disclosure provides a communication processing method and apparatus and a readable storage medium. The method comprises: receiving first signaling sent by a network device, the first signaling comprising pre-coding resource block group (PRG) configuration information applicable to a subband full-duplex (SBFD) time domain unit; and determining a first PRG size for downlink (DL) transmission in the SBFD time domain unit according to the first signaling. According to the method of the present disclosure, user equipment obtains PRG configuration information applicable to an SBFD time domain unit by receiving the first signaling sent by the network device. Therefore, in an SBFD scene, the user equipment can accurately determine the first PRG size according to a reasonable PRG parameter configuration, and accuracy of data transmission can be improved in the transmission process of the SBFD time domain unit.

FIG. 2

**Description**

**FIELD**

The present disclosure relates to the field of communication technologies, and in particular relates to a method for processing communication, an apparatus for processing communication and a readable storage medium.

**BACKGROUND**

Duplex enhancement is introduced in Release 18 (Rel-18 or R18) of the 3rd generation partnership project (3GPP). The duplex enhancement project includes a study of subband full duplex (SBFD).
The SBFD means that a carrier component or component carrier (CC) is divided into multiple subbands (SB) in a frequency domain range on a downlink (DL) symbol or a flexible (F) symbol, the multiple SBs may include an uplink (UL) subband and at least one DL subband. A base station may receive an UL signal in the UL subband while sending a DL signal in the DL subband.

**SUMMARY**

The present disclosure provides a method for processing communication, an apparatus for processing communication and a readable storage medium.
In a first aspect, the present disclosure provides a method for processing communication, performed by a user equipment, including:

receiving a first signaling sent by a network device, in which the first signaling includes precoding resource block group (PRG) configuration information applicable to a subband full duplex (SBFD) time domain unit; and
determining, according to the first signaling, a first PRG size for a downlink (DL) transmission in the SBFD time domain unit.

In some possible implementations, determining, according to the first signaling, the first PRG size for the DL transmission in the SBFD time domain unit includes:

determining the first PRG size according to a configuration of a first field in the first signaling,
in which the PRG configuration information is dedicated to the SBFD time domain unit, and the first field indicates a PRG bundling type.

In some possible implementations, determining the first PRG size according to the configuration of the first field in the first signaling includes:
in a case where the first field is not configured in the first signaling, determining that the first PRG size is a first value.
In some possible implementations, determining the first PRG size according to the configuration of the first field in the first signaling includes:
in a case where the first field configured in the first signaling indicates a static type, determining that the first PRG size is a second value or a wideband PRG.
In some possible implementations, determining the first PRG size according to the configuration of the first field in the first signaling includes:

in a case where the first field configured in the first signaling indicates a dynamic type, determining the first PRG size according to a second field and a third field in the first signaling, and a second signaling of the network device,
in which the second field indicates a first bundling size setting and the third field indicates a second bundling size setting, and the second signaling includes or does not include a physical resource block (PRB) bundling size indication field.

In some possible implementations, determining the first PRG size according to the second field and the third field in the first signaling and the second signaling of the network device includes one of:

in a case where the second signaling includes the PRB bundling size indication field, and a bit value of the PRB bundling size indication field is a third value, determining the first PRG size according to the first bundling size setting;
in a case where the second signaling includes the PRB bundling size indication field, and a bit value of the PRB bundling size indication field is a third value, determining the first PRG size according to the first bundling size setting, PRBs scheduled by the network device, and a corresponding bandwidth part (BWP) size; or

in a case where the second signaling does not includes the PRB bundling size indication field, determining the first PRG size according to the second bundling size setting.

In some possible implementations, the PRG configuration information is applicable to the SBFD time domain unit and a non-SBFD DL time domain unit.

In some possible implementations, determining, according to the first signaling, the first PRG size for the DL transmission in the SBFD time domain unit includes:

determining, according to the first signaling, that a second PRG size of the non-SBFD DL time domain unit is a wideband PRG, and determining that the first PRG size is a first value.

In some possible implementations, determining, according to the first signaling, the first PRG size for the DL transmission in the SBFD time domain unit includes:

determining, according to the first signaling, that a second PRG size of the non-SBFD DL time domain unit is a wideband PRG, and determining the first PRG size according to a configuration of a first field in the first signaling.

In some possible implementations, determining the first PRG size according to the configuration of the first field in the first signaling includes one of:

in a case where the first field configured in the first signaling indicates a static type, determining that the first PRG size is a first value or a second value;

in a case where the first field configured in the first signaling indicates a dynamic type, and a second signaling received does not includes a PRB bundling size indication field, determining that the first PRG size is a first value or a second value; or

in a case where the first field configured in the first signaling indicates a dynamic type, and a bit value of a PRB bundling size indication field in a second signaling is a third value, determining that the first PRG size is a first value or a second value.

In some possible implementations, determining, according to the first signaling, the first PRG size for the DL transmission in the SBFD time domain unit includes:

determining, according to the first signaling, that a second PRG size of the non-SBFD DL time domain unit is a wideband PRG, and determining that the first PRG size is a minimum value between a virtual resource block (VRB) bundling size and a resource block group (RBG) size.

In some possible implementations, the SBFD time domain unit includes a first frequency domain range and a second frequency domain range for the DL transmission; and

determining, according to the first signaling, the first PRG size for the DL transmission in the SBFD time domain unit includes:

determining, according to the first signaling, that a second PRG size of the non-SBFD DL time domain unit is a wideband PRG, and determining that the first PRG size is a wideband PRG in the first frequency domain range and/or the second frequency domain range,

in which there is a discontinuity between the first frequency domain range and the second frequency domain range.

In some possible implementations, in a case where the first PRG size is the wideband PRG in the first frequency domain range and the second frequency domain range, precoding matrices corresponding to the first frequency domain range and the second frequency domain range are the same or different.

In some possible implementations, determining, according to the first signaling, the first PRG size for the DL transmission in the SBFD time domain unit includes:

in a case where a first field configured in the first signaling indicates a dynamic type, determining the first PRG size according to whether PRBs scheduled by the network device satisfy a first condition,

in which a bit value of a PRB bundling size indication field in a second signaling received from the network device is a third value, and the first signaling indicates that a first bundling size setting is configured with two PRG sizes.

In some possible implementations, determining the first PRG size according to whether the PRBs scheduled by the network device satisfy the first condition includes one of:

in a case where the PRBs scheduled satisfy the first condition, determining that the first PRG size is a wideband PRG; or

in a case where the PRBs scheduled do not satisfy the first condition, determining that the first PRG size is a first value or a second value.

In some possible implementations, the first condition includes:

the PRBs scheduled being continuous, and a numerical count of the PRBs scheduled being greater than a fourth value,
in which the fourth value is determined according to a numerical count of resource blocks (RB) for the DL transmission on a BWP corresponding to the SBFD time domain unit.

In some possible implementations, the PRBs scheduled being continuous includes: PRBs scheduled in a first frequency domain range are continuous, and PRBs scheduled in a second frequency domain range are continuous.
In some possible implementations, the first PRG size in the first frequency domain range and/or the second frequency domain range is the wideband PRG; and
in a case where the first PRG size in the first frequency domain range and the second frequency domain range is the wideband PRG, precoding matrices corresponding to the first frequency domain range and the second frequency domain range are the same or different.
In some possible implementations, not satisfying the first condition includes at least one of:

PRBs scheduled in a first frequency domain range being discontinuous;
PRBs scheduled in a second frequency domain range being discontinuous; or
a numerical count of the PRBs scheduled being less than or equal to the fourth value.

In some possible implementations, the first signaling further includes information indicating a third frequency domain range, and the third frequency domain range is not available for the DL transmission.
In some possible implementations, the third frequency domain range includes at least one of:

a frequency domain range for an uplink (UL) transmission; or
a frequency domain range corresponding to a guard band (GB).

In some possible implementations, the method further includes:
determining, according to the first PRG size of the SBFD time domain unit, a numerical count of PRBs for the DL transmission among all PRGs within the BWP.
In a second aspect, the present disclosure provides a method for processing communication, performed by a network device, including:
sending a first signaling to a user equipment, in which the first signaling includes PRG configuration information applicable to an SBFD time domain unit, and the first signaling is used by the user equipment to determine a first PRG size for a DL transmission in the SBFD time domain unit.
In some possible implementations, the first signaling includes at least one of:

a first field;
a second field; or
a third field,

in which the first field indicates a PRG bundling type, the second field indicates a first bundling size setting, and the third field indicates a second bundling size setting.
In some possible implementations, the PRG configuration information is dedicated to the SBFD time domain unit.
In some possible implementations, in a case where the first field is not configured in the first signaling, it is determined that the first PRG size is a first value.
In some possible implementations, in a case where the first field configured in the first signaling indicates a static type, it is determined that the first PRG size is a second value or a wideband PRG.
In some possible implementations, in a case where the first field configured in the first signaling indicates a dynamic type, the first PRG size is determined according to the second field and the third field in the first signaling and a second signaling of the network device.
In some possible implementations, the method further includes:
sending the second signaling to the user equipment, in which the second signaling includes or does not include a PRB bundling size indication field.
In some possible implementations, the PRG configuration information is applicable to the SBFD time domain unit and a non-SBFD DL time domain unit.

In some possible implementations, in a case where a second PRG size of the non-SBFD DL time domain unit is a wideband PRG, it is determined that the first PRG size is a first value.

In some possible implementations, in a case where a second PRG size of the non-SBFD DL time domain unit is a wideband PRG, the first PRG size is determined according to a configuration of the first field in the first signaling.

In some possible implementations, the first PRG size satisfies one of:

in a case where the first field configured in the first signaling indicates a static type, determining that the first PRG size is a first value or a second value;

in a case where the first field configured in the first signaling indicates a dynamic type, and a second signaling received does not include a PRB bundling size indication field, determining that the first PRG size is a first value or a second value; or

in a case where the first field configured in the first signaling indicates a dynamic type, and a bit value of a PRB bundling size indication field in a second signaling is a third value, determining that the first PRG size is a first value or a second value.

In some possible implementations, in a case where a second PRG size of the non-SBFD DL time domain unit is a wideband PRG, it is determined that the first PRG size is a minimum value between a virtual resource block (VRB) bundling size and an RBG size.

In some possible implementations, the SBFD time domain unit includes a first frequency domain range and a second frequency domain range for the DL transmission; and

in a case where a second PRG size of the non-SBFD DL time domain unit is a wideband PRG, it is determined that the first PRG size in the first frequency domain range and/or the second frequency domain range is the wideband PRG, in which there is a discontinuity between the first frequency domain range and the second frequency domain range.

In some possible implementations, in a case where the first field configured in the first signaling indicates a dynamic type, the first PRG size is determined according to whether PRBs scheduled by the network device satisfy a first condition, and

a bit value of a PRB bundling size indication field in a second signaling sent is a third value, and the first signaling indicates that the first bundling size setting configures two PRG sizes.

In some possible implementations, in a case where the PRBs scheduled satisfy the first condition, it is determined that the first PRG is a wideband PRG; and

in a case where the PRBs scheduled do not satisfy the first condition, it is determined that the first PRG size is a first value or a second value.

In some possible implementations, the first condition includes:

the PRBs scheduled being continuous, and a numerical count of the PRBs scheduled being greater than a fourth value,

in which the fourth value is determined according to a numerical count of resource blocks (RB) for the DL transmission on a BWP corresponding to the SBFD time domain unit.

In some possible implementations, the PRBs scheduled being continuous includes:

PRBs scheduled in a first frequency domain range being continuous, and PRBs scheduled in a second frequency domain range being continuous.

In some possible implementations, the first PRG size in the first frequency domain range and/or the second frequency domain range is the wideband PRG; and

in a case where the first PRG size in the first frequency domain range and the second frequency domain range is the wideband PRG, precoding matrices corresponding to the first frequency domain range and the second frequency domain range are the same or different.

In some possible implementations, not satisfying the first condition includes at least one of:

PRBs scheduled in a first frequency domain range being discontinuous;

PRBs scheduled in a second frequency domain range being discontinuous; or

a numerical count of the PRBs scheduled being less than or equal to the fourth value.

In some possible implementations, the first signaling further includes information indicating a third frequency domain range, and the third frequency domain range is not available for the DL transmission.

In some possible implementations, the third frequency domain range includes at least one of:

a frequency domain range for a UL transmission; or

a frequency domain range corresponding to a GB.

In a third aspect, the present disclosure provides a first communication apparatus. The apparatus may implement the functions of the above methods in a form of a hardware structure, a software module, or a combination of a hardware structure and a software module.

In a case that the apparatus shown in the third aspect is implemented by means of the software module, the apparatus may include a transceiver module and a processing module coupled to each other. The transceiver module is configured to support the communication apparatus to perform communication, and the processing module is configured for the communication apparatus to perform a processing operation, such as generating signals/information to be sent.

In a case that the steps described in the first aspect above are performed, the transceiver module is configured to receive a first signaling sent by a network device, in which the first signaling includes PRG configuration information applicable to a SBFD time domain unit; and

the processing module is configured to determine, according to the first signaling, a first PRG size for a DL transmission in the SBFD time domain unit.

In a fourth aspect, the present disclosure provides a second communication apparatus. The apparatus may implement the functions of the above methods in a form of a hardware structure, a software module, or a combination of a hardware structure and a software module.

In a case that the apparatus shown in the fourth aspect is implemented by means of the software module, the apparatus may include a transceiver module. The transceiver module is configured to support the communication apparatus to perform communication.

In a case that the step described in the second aspect above is performed, the transceiver module is configured to send a first signaling to a user equipment, in which the first signaling includes PRG configuration information applicable to a SBFD time domain unit, and the first signaling is used by the user equipment to determine a first PRG size for a DL transmission in the SBFD time domain unit.

In a fifth aspect, the present disclosure provides a communication device, including: one or more processors, in which the processor is configured to invoke instructions to cause the communication device to perform any one of the possible designs of the first aspect or the second aspect.

In a sixth aspect, the present disclosure provides a computer-readable storage medium having stored therein instructions (or computer programs, programs) that, when invoked and executed by a computer, cause the computer to perform any one of the possible designs of the first aspect or the second aspect.

It is to be understood that both the foregoing general description and the following detailed descriptions are illustrative and explanatory only and shall not be construed to limit the present disclosure.

## BRIEF DESCRIPTION OF THE DRAWINGS

The accompanying drawings provided herein are described for better understanding of embodiments of the present disclosure, and constitute a part of the specification. The accompanying drawings are used to explain the present disclosure together with the embodiments of the present disclosure, and do not constitute a limitation for the present disclosure, in which:

The accompanying drawings, which are incorporated in and constitute a part of this specification, illustrate embodiments in line with the present disclosure and, together with the description, serve to explain principles of the present disclosure.

FIG. 1 is a schematic diagram illustrating a wireless communication system architecture provided by an embodiment of the present disclosure.

FIG. 2 is an interaction flowchart illustrating a method for processing communication according to an example embodiment.

FIG. 3 is a schematic diagram illustrating a subband full duplex (SBFD) time domain unit according to an example embodiment.

FIG. 4a is a flowchart illustrating a method for processing communication according to an example embodiment.

FIG. 4b is a flowchart illustrating a method for processing communication according to an example embodiment.

FIG. 4c is a flowchart illustrating a method for processing communication according to an example embodiment.

FIG. 4d is a flowchart illustrating a method for processing communication according to an example embodiment.

FIG. 4e is a flowchart illustrating a method for processing communication according to an example embodiment.

FIG. 4f is a flowchart illustrating a method for processing communication according to an example embodiment.

FIG. 4g is a flowchart illustrating a method for processing communication according to an example embodiment.

FIG. 5 is a schematic diagram illustrating a frequency domain range corresponding to a subband full duplex (SBFD) time domain unit according to an example embodiment.

FIG. 6 is a flowchart illustrating a method for processing communication according to another example embodiment.

FIG. 7 is a schematic diagram illustrating a method for processing communication according to an example embodiment.

FIG. 8 is a block diagram illustrating an apparatus for processing communication according to an example embodiment.

FIG. 9 is a block diagram illustrating a user equipment according to an example embodiment.

FIG. 10 is a block diagram illustrating an apparatus for processing communication according to an example embodiment.

FIG. 11 is a block diagram illustrating a network device according to an example embodiment.

## DETAILED DESCRIPTION

Embodiments of the present disclosure will now be further described with reference to the accompanying drawings and detailed description.

Reference will now be made in detail to embodiments, examples of which are illustrated in the accompanying drawings. The following description refers to the accompanying drawings in which the same reference numerals in different drawings represent the same or similar elements unless otherwise represented. The implementations set forth in the following description of embodiments do not represent all implementations in line with the present disclosure. Instead, they are merely examples of devices and methods in line with aspects related to the present disclosure as recited in the appended claims.

Terms used in the present disclosure are only for the purpose of describing specific embodiments, but should not be construed to limit the present disclosure. As used in the present disclosure and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

In some embodiments, the name of information or the like is not limited to the name described in the embodiments, and terms such as "information", "message", "signal", "signaling", "report", "configuration", "indication", "instruction", "command", "channel", "parameter", "domain", "field", "symbol", "codebook", "codeword", "bit", "data", "program", and "chip" may be replaced with each other.

In some embodiments, terms such as "codebook", "codeword", and "precoding matrix" may be replaced with each other. For example, the codebook may be a collection of one or more codewords/precoding matrices.

In some embodiments, terms such as "uplink", and "physical uplink" may be replaced with each other, terms such as "downlink", and "physical downlink" may be replaced with each other, and terms such as "side", "sidelink", "side communication", "sidelink communication", "direct connection", "direct link", "direct communication" and "direct link communication" may be replaced with each other.

In some embodiments, terms such as "downlink control information (DCI)", "downlink (DL) assignment", "DL DCI", "uplink (UL) grant", and "UL DCI" may be replaced with each other.

In some embodiments, terms such as "physical downlink shared channel (PDSCH)" and "DL data" may be replaced with each other, and terms such as "physical uplink shared channel (PUSCH)" and "UL data" may be replaced with each other.

In some embodiments, terms such as "radio", "wireless", "radio access network (RAN)", "access network (AN)", and "RAN-based" may be replaced with each other. In some embodiments, terms such as "search space", "search space set", "search space configuration", "search space set configuration", "control resource set (CORESET)", and "CORESET configuration" may be replaced with each other.

In some embodiments, terms such as "synchronization signal (SS)", "synchronization signal block (SSB)", "reference signal (RS)", "pilot", and "pilot signal" may be replaced with each other.

In some embodiments, terms such as "moment", "time point", "time", and "time position" may be replaced with each other, and terms such as "duration", "period", "time window", "window", and "time" may be replaced with each other. In some embodiments, terms such as "component carrier (CC)", "cell", "frequency carrier", and "carrier frequency" may be replaced with each other. In some embodiments, terms such as "resource block (RB)", "physical resource block (PRB)", "sub-carrier group (SCG)", "resource element group (REG)", "PRB pair", "RB pair", and "resource element (RE)" may be replaced with each other. In some embodiments, terms such as "wireless access scheme" and "waveform" may be replaced with each other. In some embodiments, terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", and "panel" may be replaced with each other. In some embodiments, terms such as "frame", "radio frame", "subframe", "slot", "sub-slot", "mini-slot", "symbol", and "transmission time interval (TTI)" may be replaced with each other. In some embodiments, terms such as "acquiring", "obtaining", "getting", "receiving", "transmitting", "bidirectional transmission", and "sending and/or receiving" may be replaced with each other, and may be interpreted as receiving from other entities, acquiring from a protocol, obtaining by self-processing, autonomously implementing, and the like. In some embodiments, terms such as "sending", "transmitting", "reporting", "issuing", "transmitting", "bi-directional transmission", and "sending and/or receiving" may be replaced with each other. In some embodiments, terms such as "predetermined" and "preset" may be interpreted as being specified in advance in a protocol or the like, or may be interpreted as performing a preset operation by a device or the like.

In some embodiments, determining may be interpreted as judging, calculating, computing, processing, deriving, investigating, searching, looking up, search, inquiry, ascertaining, receiving, transmitting, input, output, accessing, resolving, selecting, choosing, establishing, comparing, assuming, expecting, considering, broadcasting, notifying, communicating, forwarding, configuring, reconfiguring, allocating, mapping, assigning, and the like, but is not limited thereto.

Description will be made in detail below to embodiments of the present disclosure. Examples of embodiments are illustrated in the accompanying drawings, in which, the same or similar numbers represent the same or similar elements or elements with the same or similar functions. Embodiments described below with reference to the accompanying drawings are exemplary, which are intended to explain the present disclosure and do not be understood a limitation of the present disclosure.

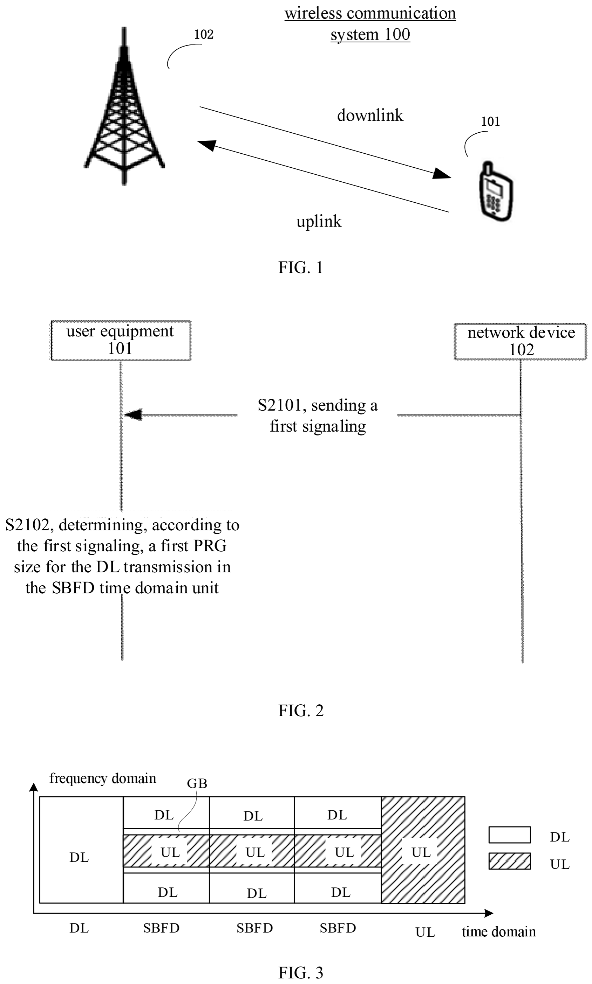

As shown in FIG. 1, a method for processing communication provided by embodiments of the present disclosure may be applied to a wireless communication system 100, which may include a terminal device 101 and a network device 102. The terminal device 101 is configured to support carrier aggregation, and the terminal device 101 may be connected to multiple carrier units of the network device 102, the multiple carrier units including one primary carrier unit and one or more secondary carrier units.

It should be understood that the wireless communication system 100 may be applicable to both low frequency and high frequency scenarios. Application scenarios of the wireless communication system 100 include, but are not limited to, a long term evolution (LTE) system, an LTE frequency division duplex (FDD) system, an LTE time division duplex (TDD) system, a worldwide interoperability for microwave access (WiMAX) communication system, a cloud wireless access network (CRAN) system, a future 5th-generation (5G) system, a new radio (NR) communication system or a future evolution public land mobile network (PLMN) system, etc.

The terminal device 101 shown above may be a user equipment (UE), a terminal, an access terminal, a terminal unit, a terminal station, a mobile station (MS), a remote station, a remote terminal, a mobile terminal, a wireless communication device, a terminal agent or terminal means. The terminal device 101 may has a wireless transceiver function, and is capable of communicating (e.g., wirelessly communicating) with one or more network devices of one or more communication systems, and accepting network service(s) provided by the network device(s) including but not limited to the illustrated network device 102.

The terminal device 101 may be a cellular phone, a cordless phone, a session initiation protocol (SIP) phone, a wireless local loop (WLL) station, a personal digital assistant (PDA) device, a handheld device with a wireless communication capability, a computing device or other processing device connected to a wireless modem, an in-vehicle device, a wearable device, a terminal device in a future 5G network or a terminal device in a future evolution PLMN network.

The network device 102 may be an access network device (or called an access network site). The access network device refers to a device providing a network access function, such as a radio access network (RAN) base station. The network device 102 may specifically include a base station (BS), or include the base station and a radio resource management device configured to control the base station. The network device 102 may further include a relay station (a relay device), an access point, and a base station in the future 5G network, a base station in the future evolution PLMN network, or an NR base station. The network device 102 may be a wearable device or an in-vehicle device. The network device 102 may also be a communication chip with a communication module.

For example, the network device 102 includes, but is not limited to, a next-generation base station (gnodeB, gNB) in 5G, an evolved node B (eNB) in the LTE system, a radio network controller (RNC), a node B (NB) in a wideband code division multiple access (WCDMA) system, a radio controller under the CRAN system, a base station controller (BSC), a base transceiver station (BTS) in a global system for mobile communications (GSM) or code division multiple access (CDMA) system, a home base station (for example, a home evolved nodeB, or a home node B (HNB)), a baseband unit (BBU), a transmitting and receiving point (TRP), a transmitting point (TP) or a mobile switching center.

The embodiments of the present disclosure provide a method for processing communication. Referring to FIG. 2, FIG. 2 is an interaction flowchart illustrating a method for processing communication according to an example embodiment. As shown in FIG. 2, the method includes the following steps.

In step S2101, a network device 101 sends a first signaling to a user equipment 101, in which the first signaling includes precoding resource block group (PRG) configuration information applicable to a subband full duplex (SBFD) time domain unit.

In some possible implementations, the first signaling may be a radio resource control (RRC) signaling and/or a DCI signaling. For example, the network device 102 sends the PRG configuration information applicable to the SBFD time domain unit by sending the RRC signaling.

In some possible implementations, the SBFD time domain unit may be an SBFD symbol, or an SBFD slot. For example, in a case where a frequency domain range corresponding to a symbol includes both a DL subband and a UL subband, the symbol may be considered as the SBFD symbol. If at least one SBFD symbol is included in multiple symbols of one slot, the slot may be considered as the SBFD slot. Optionally, if all of the multiple symbols of one slot are the SBFD symbols, the slot may be considered as the SBFD slot.

In an example, FIG. 3 is a schematic diagram illustrating an SBFD time domain unit with a horizontal axis representing a time domain and a vertical axis representing a frequency domain. As shown in FIG. 3, taking a time domain unit as a slot as an example, a slot#0 is a DL slot, slots#1-3 are SBFD slots, and a slot#4 is a UL slot.

In some possible embodiments, in the SBFD time domain unit, such as in the SBFD slot shown in FIG. 3, the SBFD time domain unit includes a frequency domain range for a DL transmission, such as a DL subband in FIG. 3; and the SBFD time domain unit further includes a frequency domain range (referred to as a third frequency domain range in the following embodiments) that is not available for the DL transmission.

In some possible implementations, the first signaling may further indicate the third frequency domain range.

In an example, the third frequency domain range includes at least one of:

a frequency domain range for a UL transmission; or
a frequency domain range corresponding to a guard band (GB).

The frequency domain range for the UL transmission is, for example, the UL subband in FIG. 3. The GB may be arranged between the UL subband and the DL subband to reduce mutual interference between a DL signal in the DL subband and a UL signal in the UL subband through frequency domain isolation. In this example, the frequency domain ranges corresponding to the UL subband and the GB may not be used for the DL transmission.

In some possible embodiments, in the SBFD time domain unit, frequency domain portions other than the third frequency domain range, such as frequency domain portions other than the GB or the UL subband, may be used for the DL transmission. For example, the frequency domain portion of the SBFD time domain unit used for the DL transmission includes a first frequency domain range and a second frequency domain range, while there may be discontinuity between the first frequency domain range and the second frequency domain range used for the DL transmission due to the presence of the third frequency domain range.

In some possible implementations, before sending the first signaling, the network device 102 may send a time domain resource configuration corresponding to the SBFD time domain unit. Alternatively, in the first signaling, the network device 102 synchronously sends the time domain resource configuration corresponding to the SBFD time domain unit and PRG configuration information.

In an example, the network device 102 may perform a time division duplex (TDD) configuration via an RRC signaling to indicate a time domain allocation of the DL transmission and the UL transmission to the user equipment 101. For example, the network device 102 configures a time domain unit of a cell-specific UL transmission and a time domain unit of a cell-specific DL transmission using TDD-UL-DL-ConfigCommon information, configures a time domain unit of user equipment-specific UL transmission and a time domain unit of a user equipment-specific DL transmission using TDD-UL-DL-ConfigDedicated information, or indicates a symbol that is a DL symbol or an F symbol using DCI 2_0 of DCI.

In some possible embodiments, the PRG configuration information may be applicable only to the SBFD time domain unit, or may be applicable only to a non-SBFD DL time domain unit (hereinafter referred to as a DL time domain unit), or may be applicable to both the SBFD time domain unit and the DL time domain unit. The DL time domain unit may be the DL symbol or the DL slot as shown in FIG. 3.

It is worth noting that the DL time domain unit represents a time domain unit used only for the DL transmission, while the SBFD time domain unit includes the DL subband used for the DL transmission and the UL subband used for the UL transmission.

In some possible embodiments, the PRG configuration information may include information related to a PRG configured by the network device 102, such as a configuration value or a type of a PRG size, which may be described in detail in the following embodiments.

It may be understood that precoding is used to improve transmission performance in a transmission of a PDSCH. The PRG may characterize a granularity for configuring the precoding, and the user equipment 101 may assume that a same precoding matrix is used on a group of consecutive PRBs represented by the PRG.

In some possible implementations, the user equipment 101 receives the first signaling sent by the network equipment 102.

In step S2102, the user equipment 101 determines, according to the first signaling, a first PRG size for the DL transmission in the SBFD time domain unit.

In some possible embodiments, the user equipment 101 determines the first PRG size for the DL transmission according to the PRG configuration information applicable to the SBFD time domain unit in the first signaling.

In some possible embodiments, the first PRG size may be one of {wideband, n2, n4}, as may be described in the following embodiments.

In an example, in a case where the first PRG size is a wideband PRG, it indicates that the user equipment 101 does not expect all DL PRBs scheduled by the network device 102 to be discontinuous, i.e., the user equipment 101 expects all DL PRBs scheduled by the network device 102 to be continuous.

In an example, in a case where the first PRG size is n2 or 2, it indicates that the PRG includes two consecutive PRBs, and a transmission of the two consecutive PRBs may use a same precoding matrix.

In an example, in a case where the first PRG size is n4 or 4, it indicates that the PRG includes four consecutive PRBs, and a transmission of the four consecutive PRBs may use a same precoding matrix.

In some possible embodiments, in a case where the first signaling further includes the third frequency domain range not available for the DL transmission, the user equipment 101 may further determine the first frequency domain range and the second frequency domain range in the SBFD time domain unit according to the third frequency domain range, in which there may be a discontinuity between the first frequency domain range and the second frequency domain range.

It may be understood that only a configuration and a determination method of a second PRG size of the DL time domain unit are defined in a relevant protocol, and since the SBFD time domain unit also includes the UL subband for the UL transmission, the determination method of the first PRG size in the SBFD time domain unit is different from that of the second PRG size.

Terms such as "first" and "second" in the first PRG size and the second PRG size are only to distinguish between the PRG size of the SBFD time domain unit and the PRG size of the DL time domain unit, and do not impose additional limitations on the meaning or order of the PRG sizes.

In the embodiments of the present disclosure, the network device 102 configures the PRG configuration information applicable to the SBFD time domain unit through the first signaling, to provide the reference configuration for determining the first PRG size in the SBFD scenario. Therefore, the user equipment 101 may more accurately determine the first PRG size of the SBFD time domain unit according to the PRG configuration information, which is beneficial to improving the accuracy of data transmission during the transmission of the SBFD time domain unit.

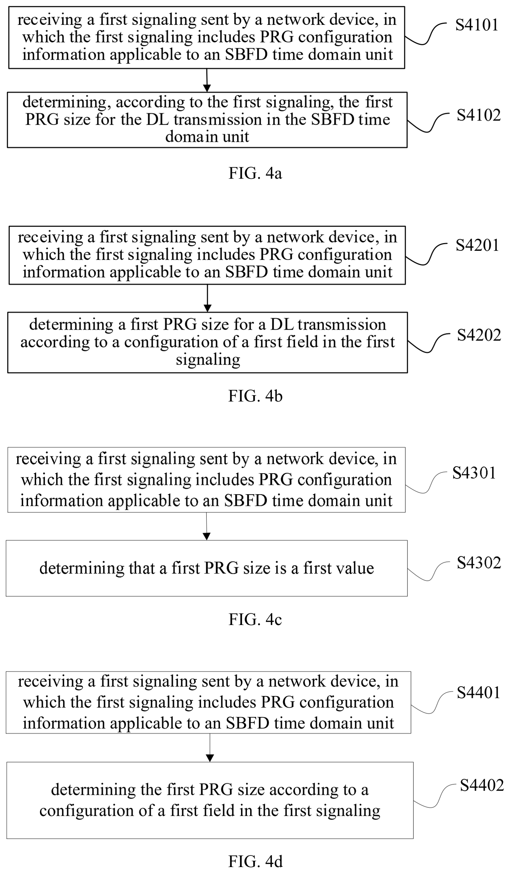

The embodiments of the present disclosure provide a method for processing communication, which is executed by a user equipment 101. Referring to FIG. 4a, FIG. 4a illustrates a method for processing communication according to an example embodiment. As shown in FIG. 4a, the method includes the following steps.

In step S4101, the user equipment 101 receives a first signaling sent by a network device 102, in which the first signaling includes PRG configuration information applicable to an SBFD time domain unit.

In some possible embodiments, for implementations of step S4101, reference can be made to the relevant implementations of step S2101, which will not be repeated here.

In some possible implementations, the SBFD time domain unit may be an SBFD symbol, or an SBFD slot. For example, in a case where a frequency domain range corresponding to a symbol includes both a DL subband and a UL subband, the symbol may be considered as the SBFD symbol. If at least one SBFD symbol is included in multiple symbols of one slot, the slot may be considered as the SBFD slot. For example, as shown in FIG. 3, slots#1-3 are SBFD slots. Optionally, if all of multiple symbols of one slot are the SBFD symbols, the slot may be considered as the SBFD slot.

In some possible embodiments, the PRG configuration information is dedicated to the SBFD time domain unit, that is, the network device 102 specifically configures the PRG configuration information applicable to an SBFD time domain unit scenario for the user equipment 101. At this time, the network device 102 is configured with two sets of PRG configuration information, one set is applicable to the SBFD time domain unit, and the other set is applicable to the DL time domain unit.

In some possible embodiments, the PRG configuration information is applicable to the SBFD time domain unit and the non-SBFD DL time domain unit. At this time, the network device 102 configures only one set of PRG configuration information, and the SBFD time domain unit and the DL time domain unit share the PRG configuration information.

In some possible embodiments, the PRG configuration information may include relevant information of a PRG.

In an example, when the network device 102 configures the relevant information of the PRG through the first signaling, the network device 102 may indicate a PRG bundling type of the PRG through a first field in the first signaling. The first field is, for example, prb-BundlingType or prb-BundlingType_SBFD.

In this example, the PRG bundling type includes a static type or a dynamic type.

In an example, the network device 102 may indicate a first bundling size setting through a second field in the first signaling, in which the second field is, for example, bundleSizeSet1 or bundleSizeSet1_SBFD.

In this example, the first bundling size setting may be configured to one or two of {2, 4, wideband}.

In an example, the network device 102 may indicate a second bundling size setting through a third field in the first signaling, in which the third field is, for example, bundleSizeSet2 or bundleSizeSet2_SBFD.

In this example, the second bundling size setting may be configured to one of {2, 4, wideband}.

In some possible embodiments, the first signaling further includes information indicating a third frequency domain range, and the third frequency domain range is not available for the DL transmission. Therefore, the user equipment 101 may determine the frequency domain range available for the DL transmission according to the third frequency domain range.

In an example, the third frequency domain range includes at least one of:

a frequency domain range for a UL transmission; or
a frequency domain range corresponding to a GB.

In some possible implementations, the first signaling may be an RRC signaling.

In some possible implementations, in a case where the PRG bundling type is configured as the dynamic type, the network device 102 may further send a second signaling.

In an example, a PRB bundling size indicator field may be configured or not configured in the second signaling.

In an example, the second signaling may be a downlink control information (DCI) signaling.

In step S4102, the user equipment 101 determines, according to the first signaling, a first PRG size for a DL transmission in the SBFD time domain unit.

In some possible embodiments, in a case where the PRG configuration information is only used for the SBFD time domain unit, for example, in a case where the network device 102 configures two sets of PRG configuration information, the user equipment 101 may determine the first PRG size according to the relevant information of the PRG. For example, the first PRG size is determined according to the configuration of at least one of the first field, the second field, and the third field in the first signaling, which may be described in detail in the following embodiments of FIG. 4b.

In some possible embodiments, in a case where the PRG configuration information is applicable to the SBFD time domain unit and the DL time domain unit, for example, in a case where the network device 102 configures only one set of PRG configuration information, the user equipment 101 may determine the first PRG size of the SBFD time domain unit according to a second PRG size of the DL time domain unit, which may be described in detail in the following embodiments of FIGS. 4c to 4g.

In some possible implementations, the method further includes step S4103.

In step S4103, the user equipment 101 determines, according to the first PRG size of the SBFD time domain unit, a numerical count of PRBs for the DL transmission among all PRGs within a bandwidth part (BWP).

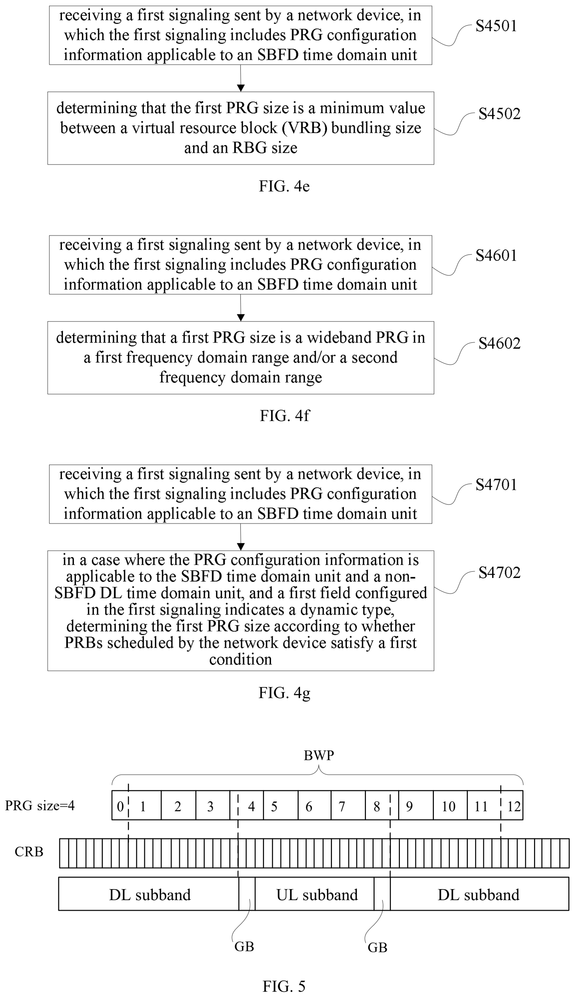

In some embodiments, in the SBFD time domain unit, a BWP corresponding to the user equipment 101 may include multiple PRGs, and the PRGs in the BWP may be divided as shown in FIG. 5, for example, the PRGs are divided according to the determined first PRG size.

It may be understood that in order to adapt to different types of UEs and service types, a 5G spectrum may be divided into different BWPs within a certain time domain range.

In some embodiments, after determining the first PRG size of each PRG, a total numerical count of PRBs in the BWP for the DL transmission may be determined.

In an example, referring to FIG. 5, a PRB in each PRG that overlaps with a frequency domain range for the DL transmission (such as a frequency domain range in which the DL subband is located in FIG. 5) is the PRB for the DL transmission in the PRG, and the numerical count of PRBs available for the DL transmission in each PRG is determined accordingly.

In some embodiments, the user equipment 101 may respectively determine the first PRG size of each PRG in the BWP according to a possible value of the first PRG size determined by the PRG configuration information and a size of the BWP.

In some embodiments, if the first PRG size $P'_{BWP,i}$ determined according to the PRG configuration information is 2 or 4, and a size of a DL BWP is $N^{size}_{\text{BWP},i}$, the numerical count of PRBs $N_{\text{PRG}}$ included in the BWP is:

$$N_{PRG} = \left\lceil \left( N^{size}_{BWP,i} + \left( N^{start}_{BWP,i} \bmod P'_{BWP,i} \right) \right) / P'_{BWP,i} \right\rceil ;$$

where $N_{BWP,i}^{start}$ represents an index of a first PRB in the BWP in a common resource block (CRB), that is, an index of the first PRB in the BWP in a resource block (RB) on an entire carrier. It may be understood that the CRB may also be used to distinguish between frequency bands occupied by different BWPs, and *mod* represents the modulo operation.

In this embodiment, in the BWP, the first PRG size $PRG_0^{size}$ of the first PRG is:

$$PRG_0^{size} = P'_{BWP,i} - N_{BWP,i}^{start} \bmod P'_{BWP,i}.$$

When $\left(N_{BWP,i}^{start} + N_{BWP,i}^{size}\right) \bmod P'_{BWP,i} > 0$, the first PRG size $PRG_{last}^{size}$ of the last PRG in the BWP is:

$PRG_{last}^{size} = \left(N_{BWP,i}^{start} + N_{BWP,i}^{size}\right) \bmod P'_{BWP,i}$, otherwise, $PRG_{last}^{size} = P'_{BWP,i}$.

Except for the first and last PRG, the first PRG size of any other PRG in the BWP is $P'_{BWP,i}$.

In an example:

when the first PRG size $P'_{BWP,i} = 4$, the PRGs in the BWP include: PRG#0, PRG#1, PRG#2, PRG#3, PRG#4, PRG#5, PRG#6, PRG#7, PRG#8, PRG#9, PRG#10, PRG#11, and PRG#12, as shown in FIG. 5.

In this example, according to $PRG_0^{size} = P'_{BWP,i} - N_{BWP,i}^{start} \bmod P'_{BWP,i} = 4 - (6 \bmod 4) = 2$, it may be determined that the first PRG size of the first PRG is 2, that is, PRG#0 includes two PRBs. According to the calculation method of the first PRG size of the last PRG, it may be determined that the first PRG size of the PRG#12 is 3, that is, the PRG#12 includes three PRBs. The remaining PRGs include four PRBs.

The user equipment 101 may determine the first PRG size for each PRG, that is, the numerical count of PRBs for the DL transmission included in each PRG, according to the overlap between the PRG and the frequency domain range for the DL transmission in the BWP, in which the frequency domain range for the DL transmission includes the frequency domain range of the DL subband, or the frequency domain range for the DL transmission includes the frequency domain range of the DL subband and the frequency domain range of the GB.

For example, in FIG. 5, the frequency domain range for the DL transmission includes the frequency domain range of the DL subband, and PRBs in PRG#0, PRG#1, PRG#2, PRG#3, PRG#9, PRG#10, PRG#11, and PRG#12 are all PRBs available for the DL transmission. A first PRB in the PRG#4 is a PRB available for the DL transmission. A last one PRB in the PRG#8 is a PRB available for the DL transmission. The numerical count of PRBs available for the DL transmission in PRG#5, PRG#6, and PRG#7 is 0.

In this example, after determining the PRB for the DL transmission, the user equipment 101 may perform listening or receiving on a PDSCH at a suitable frequency domain location.

In the embodiments of the present disclosure, the user equipment 101 obtains the PRG configuration information applicable to the SBFD time domain unit by receiving the first signaling sent by the network device 102. Therefore, the user equipment 101 may more accurately determine the first PRG size according to the reasonable PRG configuration information in the SBFD scenario, which is beneficial to improving the accuracy of data transmission during the transmission of the SBFD time domain unit.

The embodiments of the present disclosure provide a method for processing communication, which is executed by a user equipment 101. Referring to FIG. 4b, FIG. 4b illustrates a method for processing communication according to an example embodiment. As shown in FIG. 4b, the method includes the following steps.

In step S4201, the user equipment 101 receives a first signaling sent by a network device 102, in which the first signaling includes PRG configuration information applicable to an SBFD time domain unit.

In some possible embodiments, for implementations of step S4201, reference can be made to the relevant implementations of steps S2101 and S4101, which will not be repeated here.

In step S4202, the user equipment 101 determines a first PRG size for a DL transmission according to a configuration of a first field in the first signaling.

The first field indicates a PRG bundling type.

In some embodiments, in a case where the PRG configuration information is dedicated to the SBFD time domain unit, the user equipment 101 determines the first PRG size for the DL transmission according to the configuration of the first field in the first signaling.

In some possible embodiments, for implementations of step S4202, reference can be made to the relevant implementations of step S4102, which will not be repeated here.

In some possible embodiments, in a case where the PRG configuration information is dedicated to the SBFD time domain unit, it indicates that the network device 102 may be configured with two sets of PRG configuration information, one set applicable to the SBFD time domain unit and the other set applicable to a DL time domain unit. The network device 102 may add in the first signaling, such as an RRC signaling, a new related field and configure the PRG configuration information applicable to the SBFD.

For example, the PRG configuration information applicable to the SBFD in the first

signaling may refer to the following example.

```
prb-BundlingType_SBFD                    CHOICE {
        staticBundling_SBFD              SEQUENCE {
        bundleSize_SBFD                  ENUMERATED { n4, wideband }
        },
        dynamicBundling_SBFD                     SEQUENCE {
                bundleSizeSet1_SBFD                      ENUMERATED { n4,
        wideband, n2-wideband, n4-wideband }
                bundleSizeSet2_SBFD                      ENUMERATED { n4,
        wideband }
                }
        },
```

For another example, the first signaling further configures the PRG configuration information applicable to the DL time domain unit, which may be referred to in the following example.

```
prb-BundlingType                         CHOICE {
        staticBundling                   SEQUENCE {
        bundleSize                       ENUMERATED { n4, wideband }
        },
        dynamicBundling                          SEQUENCE {
                bundleSizeSet1                           ENUMERATED { n4, wideband,
        n2-wideband, n4-wideband }
                bundleSizeSet2                           ENUMERATED { n4, wideband }
                }
        },
```

In some possible implementations, the PRG bundling type of the PRG is indicated by the first field in the first signaling. The first field is, for example, prb-BundlingType_SBFD or prb-BundlingType. In the embodiments of the present disclosure, the first field is described with prb-BundlingType_SBFD as an example, and the PRG bundling type includes a static type or a dynamic type.

In some possible embodiments, different implementations of step S4202 may be performed according to the configuration of the first field in the first signaling, see steps S4202-1, S4202-2, or S4202-3.

In some embodiments, step S4202 may adopt the following step S4202-1.

In step S4202-1, in a case where the first field is not configured in the first signaling, the user equipment 101 determines that the first PRG size is a first value.

For example, the first field is prb-BundlingType_SBFD, and the first value may correspond to 2 or n2.

In this embodiment, in a case where PRB-BundlingType_SBFD is not configured in the first signaling, the first PRG size is two PRBs.

In some embodiments, step S4202 may adopt the following step S4202-2.

In step S4202-2, in a case where the first field configured in the first signaling indicates the static type, the user equipment 101 determines that the first PRG size is a second value or a wideband PRG.

For example, the second value may correspond to 4 or n4.

The wideband PRG indicates that the user equipment 101 does not expect all DL PRBs scheduled by the network device 102 to be discontinuous.

In this embodiment, in a case where the first field indicates the static type, such as staticBundling_SBFD, the user equipment 101 may determine, according to a configuration in bundleSize_SBFD, that the first PRG size is n4 or the wideband PRG.

In some possible implementations, step S4202 may adopt the following step S4202-2.

In step S4202-3, in a case where the first field configured in the first signaling indicates the dynamic type, the user equipment 101 determines the first PRG size according to a second field and a third field in the first signaling, and a second signaling of the network device.

The second field indicates a first bundling size setting and the third field indicates a second bundling size setting, and the second signaling includes or does not include a PRB bundling size indication field.

The second field is, for example, bundleSizeSet1_SBFD, and bundleSizeSet1_SBFD may be configured as one or two of {2, 4, wideband}.

The third field is, for example, bundleSizeSet2_SBFD, and bundleSizeSet2_SBFD may be configured as one of {2, 4, wideband}.

In an example, the second signaling may be a DCI signaling. The network device 102 may send the second signaling in a scenario where the first field indicates the dynamic type. The user equipment 101 may receive the second signaling.

The PRB bundling size indication field is, for example, a PRB bundling size indicator field, which may occupy one or more bits.

In this embodiment, in a case where the first field indicates the dynamic type, such as dynamicBundling_SBFD, the user equipment 101 may determine the first PRG size according to bundleSizeSet1_SBFD, bundleSizeSet2_SBFD, and the DCI signaling. At this time, the first PRG size may use one of the following examples.

In a first example, in a case where the second signaling includes the PRB bundling size indication field, and a bit value of the PRB bundling size indication field is a third value, the user equipment 101 determines the first PRG size according to the first bundling size setting.

In this example, in a case where the PRB bundling size indication field occupies one bit, the third value may be 1, for example. In a case where the PRB bundling size indication field occupies several bits, the third value may also be other set values.

In this example, the user equipment 101 determines the first PRG size according to the first bundling size setting bundleSizeSet1_SBFD. BundleSizeSet1_SBFD may be configured as one or two of {2, 4, wideband}.

This example may be used in a scenario where only one value is configured for bundleSizeSet1_SBFD. In this case, the first PRG size uses the value configured for bundleSizeSet1_SBFD.

In a second example, in a case where the second signaling includes the PRB bundling size indication field, and a bit value of the PRB bundling size indication field is a third value, the user equipment 101 determines the first PRG size according to the first bundling size setting, PRBs scheduled by the network device, and a corresponding BWP size.

In this example, in a case where the PRB bundling size indication field occupies one bit, the third value may be 1, for example. In a case where the PRB bundling size indication field occupies several bits, the third value may also be other set values.

In this example, the user equipment 101 determines the first PRG size according to the first bundling size setting bundleSizeSet1_SBFD. BundleSizeSet1_SBFD may be configured as one or two of {2, 4, wideband}.

If bundleSizeSet1_SBFD is configured with two values, such as n2-wideband or n4-wideband, in a case where the PRBs scheduled by the network device 102 are consecutive and the numerical count of the scheduled PRBs exceeds $N_{BWP,i}^{size}/2$, the first PRG size $P_{BWP,i}'$ is the wideband PRG; otherwise the first PRG size is n2 or n4.

Optionally, if bundleSizeSet1_SBFD is configured with two values, such as n2-wideband or n4-wideband, in a case where the PRBs scheduled by the network device 102 are consecutive and the numerical count of scheduled PRBs exceeds $N_{DL,i}^{size}/2$, the first PRG size $P_{BWP,i}'$ is the wideband PRG; otherwise the first PRG size is n2 or n4, where $N_{DL,i}^{size}$ represents the numerical count of PRBs included in the frequency domain range available for the DL transmission in the SBFD time domain unit.

Optionally, the SBFD time domain unit includes a first frequency domain range and a second frequency domain range for the DL transmission, in which there is a discontinuity between the first frequency domain range and the second frequency domain range. If bundleSizeSet1_SBFD is configured with two values, such as n2-wideband or n4-wideband, in a case where the PRBs scheduled by the network device 102 are consecutive in the first frequency domain range and consecutive in the second frequency domain range, and the numerical count of scheduled PRBs exceeds $N_{DL,i}^{size}/2$, the first PRG size $P'_{BWP,i}$ is the wideband PRG; otherwise, the first PRG size is n2 or n4, where $N_{DL,i}^{size}$ represents the numerical count of PRBs included in the frequency domain range available for the DL transmission in the SBFD time domain unit. It may be understood that in a case of determining whether the numerical count of PRBs scheduled exceeds $N_{DL,i}^{size}/2$, the numerical count of PRBs scheduled includes a sum of the numerical count of PRBs scheduled in the first frequency domain range and the numerical count of PRBs scheduled in the second frequency domain range.

In an example, as shown in FIG. 5, a numerical count of RBs in the DL frequency domain range that overlap with the BWP is the numerical count of RBs in the BWP available for the DL transmission. The frequency domain range not available for the DL transmission includes frequency domain ranges corresponding to the GB and the UL subband, or includes a frequency domain range corresponding to the UL subband.

In a third example, in a case where the second signaling does not includes the PRB bundling size indication field, the first PRG size is determined according to the second bundling size setting.

In this example, in a case where the PRB bundling size indication field does not exist, that is, the PRB bundling size indication field occupies 0 bit, the user equipment 101 determines the first PRG size according to the second bundling size setting bundleSizeSet2_SBFD. BundleSizeSet2_SBFD may be configured as one of {2, 4, wideband}.

In some possible embodiments, the method may further include step S4103, and for implementations of step S4103, reference can be made to the relevant implementations of steps S2101 and S4101, which will not be repeated here.

In embodiments of the present disclosure, the network device 102 may configure the PRG configuration information applicable to the SBFD time domain unit for the user equipment 101, such that the user equipment 101 may determine the first PRG size of the SBFD time domain unit according to the newly added PRG configuration information in the SBFD scenario.

The embodiments of the present disclosure provide a method for processing communication, which is executed by a user equipment 101. Referring to FIG. 4c, FIG. 4c illustrates a method for processing communication according to an example embodiment. As shown in FIG. 4c, the method includes the following steps.

In step S4301, the user equipment 101 receives a first signaling sent by a network device 102, in which the first signaling includes PRG configuration information applicable to an SBFD time domain unit.

In some possible embodiments, for implementations of step S4301, reference can be made to the relevant implementations of steps S2101 and S4101, which will not be repeated here.

In step S4302, the user equipment 101 determines that a first PRG size is a first value.

In some possible embodiments, in a case where the PRG configuration information is applicable to the SBFD time domain unit and a non-SBFD DL time domain unit, and a second PRG size of the non-SBFD DL time domain unit is determined as a wideband PRG according to the first signaling, the user equipment 101 determines that the first PRG size is the first value.

In some possible embodiments, for implementations of step S4302, reference can be made to the relevant implementations of step S4102, which will not be repeated here.

In some possible embodiments, the first value corresponds to 2 or n2.

In some possible embodiments, the network device 102 configures only one set of PRG configuration information, for example, the PRG configuration information in the first signaling, which may be referred to in the following example:

```
prb-BundlingType                    CHOICE {
    staticBundling                  SEQUENCE {
    bundleSize                      ENUMERATED { n4, wideband }
    },
    dynamicBundling                     SEQUENCE {
        bundleSizeSet1                      ENUMERATED { n4, wideband,
n2-wideband, n4-wideband }
        bundleSizeSet2                      ENUMERATED { n4, wideband }
    }
},
```

In some possible embodiments, the user equipment 101 may determine the second PRG size according to the PRG configuration information. For example:

if the PRB-BundlingType field is not configured in the first signaling, the second PRG size is equal to two PRBs;
if the PRB-BundlingType in the first signaling is configured as a static type, the second PRG size is equal to four PRBs or is the wideband PRG, which may be determined according to an RRC configuration; and
if the prb-BundlingType in the first signaling is configured as a dynamic type, and an RRC is configured with bundleSizeSet1 and bundleSizeSet2, in which bundleSizeSet1 may be configured with one or two of {2, 4, wideband}, and bundleSizeSet2 may be configured with one of {2, 4, wideband}.

At this time, in a case where the PRB bundling size indicator field in DCI 1_1 does not exist, the second PRG size is determined using bundleSizeSet2;

in a case where a bit value of the PRB bundling size indicator field in the DCI 1_1 is 1, and bundleSizeSet1 is configured with one value, a value configured in bundleSizeSet1 is used as the second PRG size; and
in a case where the bit value of the PRB bundling size indicator field in the DCI 1_1 is 1, and bundleSizeSet1 is configured with two values (such as n2-wideband or n4-wideband), if the PRBs scheduled by the network device 102 are continuous and a numerical count of PRBs scheduled exceeds $N_{BWP,i}^{size}/2$, the second PRG size is the wideband PRG, otherwise the second PRG size is n2 or n4.

It may be understood that in a case where the PRG size is configured as the wideband PRG, the user equipment 101 does not expect the scheduled PRB to be discontinuous.
In some possible implementations, the method may also include step S4103, and for implementations of step S4103, reference can be made the above described embodiments, which will not be repeated here.
In the embodiments of the present disclosure, in the scenario where one set of PRG configuration information is configured, in a case where the second PRG size of the DL time domain unit is the wideband PRG, the user equipment 101 may determine the first PRG size of the non-wideband PRG in the SBFD time domain unit.
The embodiments of the present disclosure provide a method for processing communication, which is executed by a user equipment 101. Referring to FIG. 4d, FIG. 4d illustrates a method for processing communication according to an example embodiment. As shown in FIG. 4d, the method includes the following steps.
In step S4401, the user equipment 101 receives a first signaling sent by a network device 102, in which the first signaling includes PRG configuration information applicable to an SBFD time domain unit.
For implementations of step S4401, reference can be made to the relevant implementations of steps S2101 and S4101, which will not be repeated here.
In step S4402, the user equipment 101 determines the first PRG size according to a configuration of a first field in the first signaling.
In some possible embodiments, in a case where the PRG configuration information is applicable to the SBFD time domain unit and a non-SBFD DL time domain unit, and the second PRG size of the DL time domain unit is determined as a wideband PRG according to the first signaling, the user equipment 101 determines the first PRG size according to the configuration of the first field in the first signaling.

In some possible implementations, for implementations of step S4402, reference can be made to the relevant implementations of step S4102, which will not be repeated here.

In some possible implementations, for determining the second PRG size, reference can be made to step S4302, which will not be repeated here.

In some possible implementations, the network device 102 is configured with only one set of PRG configuration information, such as the PRG configuration information in the first signaling, which may be referred to in the following example:

```
prb-BundlingType                    CHOICE {
        staticBundling              SEQUENCE {
        bundleSize                  ENUMERATED { n4, wideband }
        },
        dynamicBundling                     SEQUENCE {
                bundleSizeSet1              ENUMERATED { n4, wideband,
n2-wideband, n4-wideband }
                bundleSizeSet2                      ENUMERATED { n4, wideband }
        }
},
```

The first field is, for example, prb-BundlingType.

In some possible implementations, step S4402 may include one of the following examples.

In a first example, in a case where the first field configured in the first signaling indicates a static type, it is determined that the first PRG size is a first value or a second value.

For example, the first value may correspond to 2 or n2, and the second value may correspond to 4 or n4. In this example, the first field indicates staticBundling, and the first PRG size is n2 or n4.

In a second example, in a case where the first field configured in the first signaling indicates a dynamic type, and a second signaling received does not includes a PRB bundling size indication field, it is determined that the first PRG size is a first value or a second value.

For example, the first signaling is an RRC signaling, and the second signaling is a DCI signaling.

In this example, in a case where the first field indicates dynamicBundling, the first signaling is configured with a second field (bundleSizeSet1) and a third field (bundleSizeSet2), and the PRB bundling size indication field does not exist in DCI 1_1 or the PRB bundling size indication field occupies 0 bit, the first PRG size is n2 or n4.

In a third example, in a case where the first field configured in the first signaling indicates a dynamic type, and a bit value of a PRB bundling size indication field in a second signaling is a third value, it is determined that the first PRG size is a first value or a second value.

For example, taking the PRB bundling size indication field occupying 1 bit as an example, the third value is 1.

In this example, the first field indicates dynamicBundling, and the first signaling is configured with the second field (bundleSizeSet1) and the third field (bundleSizeSet2).

In the DCI 1_1, in a case where the bit value of the PRB bundling size indication field is 1, and bundleSizeSet1 is configured with 1 value, the first PRG size is n2 or n4.

In the DCI 1_1, in a case where the bit value of the PRB bundling size indication field is 1, and bundleSizeSet1 is configured with 2 values, the first PRB size is n2 or n4. Optionally, the first PRG size is a value excluding a wideband PRG from the two values configured by bundleSizeSet1. For example, in a case where bundleSizeSet1 is configured with {n2-wideband}, the PRG size is n2.

In some embodiments, in the above three examples, the first PRG size is n2 or n4, and in at least one example, the first PRG size is n4.

In some possible implementations, the method may further include step S4103. For implementations of step S4103, reference can be made to the description of the above embodiments, which will not be repeated here.

In the embodiments of the present disclosure, in a scenario where one set of PRG configuration information is configured, in a case where the second PRG size of the DL time domain unit is the wideband PRG, the user equipment 101 may determine the first PRG size of the non-wideband PRG in the SBFD time domain unit.

The embodiments of the present disclosure provide a method for processing communication, which is executed by a user equipment 101. Referring to FIG. 4e, FIG. 4e illustrates a method for processing communication according to an example embodiment. As shown in FIG. 4e, the method includes the following steps.

In step S4501, the user equipment 101 receives a first signaling sent by a network device 102, in which the first signaling includes PRG configuration information applicable to an SBFD time domain unit.

For implementations of step S4501, reference can be made to the relevant implementations of steps S2101 and S4101, which will not be repeated here.

In step S4502, the user equipment 101 determines that the first PRG size is a minimum value between a virtual resource block (VRB) bundling size and a resource block group (RBG) size.

In some possible implementations, in a case where the PRG configuration information is applicable to the SBFD time domain unit and a non-SBFD DL time domain unit, and a second PRG size of the non-SBFD DL time domain unit is determined as a wideband PRG according to the first signaling, the user equipment 101 determines that the first PRG size is the minimum value between the VRB bundling size and the RBG size.

In some possible implementations, for implementation of step S4502, reference can be made to the relevant implementations of step S4102, which will not be repeated here.

In some possible implementations, for determining the second PRG size, reference can made to step S4302, which will not be repeated here.

In some possible implementations, the user equipment 101 may determine the VRB bundling size according to an RRC parameter VRB-ToPRB-Interleaver. If the parameter VRB-ToPRB-Interleaver is not configured, the VRB bundling size may take a default value of 2.

In some possible embodiments, the RBG size may be determined according to two parameters, for example, a numerical count of PRBs included in a BWP and a parameter rbg-Size in an information element PDSCH-config of an RRC configuration. Optionally, the RBG size corresponding to the numerical count of PRBs included in the BWP is defined to have two possible values, and the network device 102 may use one of these values as the RBG size via the RRC configuration.

It may be understood that the VRB bundling size or the RBG size may also be determined by other means.

In some possible implementations, the method may further include step S4103. For implementations of step S4103, reference can be made to the description of the above embodiments, which will not be repeated here.

In the embodiments of the present disclosure, in a scenario where one set of PRG configuration information is configured, in a case where the second PRG size of the DL time domain unit is the wideband PRG, the user equipment 101 can determine the first PRG size in the SBFD time domain unit according to the VRB bundling size and the RBG size.

The embodiments of the present disclosure provide a method for processing communication, which is executed by a user equipment 101. Referring to FIG. 4f, FIG. 4f illustrates a method for processing communication according to an example embodiment. As shown in FIG. 4f, the method includes the following steps.

In step S4601, the user equipment 101 receives a first signaling sent by a network device 102, in which the first signaling includes PRG configuration information applicable to an SBFD time domain unit.

For implementations of step S4601, reference can be made to the relevant implementations of steps S2101 and S4101, which will not be repeated here.

In step S4602, the user equipment 101 determines that a first PRG size is a wideband PRG in a first frequency domain range and/or a second frequency domain range.

In some possible implementations, in a case where the PRG configuration information is applicable to the SBFD time domain unit and a non-SBFD DL time domain unit, and a second PRG size of the non-SBFD DL time domain unit is determined as a wideband PRG according to the first signaling, the user equipment 101 determines that the first PRG size is the wideband PRG in the first frequency domain range and/or the second frequency domain range.

In some possible implementations, for implementations of step S4602, reference can be made to the relevant implementations of step S4102, which will not be repeated here.

In some possible implementations, for determining the second PRG size, reference can be made to step S4302, which will not be repeated here.

In some possible implementations, the SBFD time domain unit includes the first frequency domain range and the second frequency domain range for the DL transmission, in which there is a discontinuity between the first frequency domain range and the second frequency domain range.

In connection with the description of the aforementioned embodiments, in the SBFD time domain unit, excluding the third frequency domain range, the remaining first frequency domain range and the second frequency domain range are frequency domain ranges in which the DL transmission may be performed.

For example, as illustrated in connection with FIG. 3 or FIG. 5, the first frequency domain range may include a DL subband on a side of a UL subband, and the second frequency domain range may include a DL subband on another side of the UL subband. In this embodiment, both DL subbands have the DL transmission.

In some possible implementations, the user equipment 101 does not expect that the PRBs scheduled by the network device 102 are discontinuous in the first frequency domain range or the second frequency domain range.

For example, in a case where the user equipment 101 expects that the PRBs scheduled by the network device 102 in the first frequency domain range are continuous, the user equipment 101 expects that the first PRG size corresponding to the first frequency domain range is the wideband PRG.

For example, in a case where the user equipment 101 expects that the PRBs scheduled by the network device 102 in the second frequency domain range are continuous, the user equipment 101 expects that the first PRG size corresponding to the second frequency domain range is the wideband PRG.

In some possible implementations, the user equipment 101 expects that the PRBs scheduled by the network device 102 are continuous in the first frequency domain range and the second frequency domain range respectively. For example, the user equipment 101 expects that the first PRG size corresponding to the first frequency domain range is the wideband PRG, and the first PRG size corresponding to the second frequency domain range is the wideband PRG.

At this time, the user equipment 101 performs precoding on the PRBs scheduled in the first frequency domain range and the second frequency domain range respectively.

In an example, in a case where the first PRG size is the wideband PRG in the first frequency domain range and the second frequency domain range, precoding matrices corresponding to the first frequency domain range and the second frequency domain range are the same or different.

For example, in a case where the user equipment 101 performs the precoding on the PRBs scheduled in the first frequency domain range and the second frequency domain range respectively, the precoding matrices are different.

In some possible implementations, the method may further include step S4103. For implementations of step S4103, reference can be made to the description of the above embodiments, which will not be repeated here.

In the embodiments of the present disclosure, it is illustrated that the user equipment 101 may apply the wideband PRG in a case where the DL transmission is performed on two DL subbands in the SBFD time domain unit.

It may be understood that in a case where the wideband PRG is applied in the DL time domain unit in related protocols, a numerical count of PRBs scheduled is required to exceed $N_{BWP,i}^{size}/2$. However, a numerical count of PRBs may be less than $N_{BWP,i}^{size}/2$, which will lead to the unavailability of the wideband PRG all the time. Therefore, in the embodiments of the present disclosure, the application scenario of the wideband PRG may be expanded.

The embodiments of the present disclosure provide a method for processing communication, which is executed by a user equipment 101. Referring to FIG. 4g, FIG. 4g illustrates a method for processing communication according to an example embodiment. As shown in FIG. 4g, the method includes the following steps.

In step S4701, the user equipment 101 receives a first signaling sent by a network device 102, in which the first signaling includes PRG configuration information applicable to an SBFD time domain unit.

For implementations of step S4701, reference can be made to the relevant implementations of steps S2101 and S4101, which will not be repeated here.

In step S4702, in a case where the PRG configuration information is applicable to the SBFD time domain unit and a non-SBFD DL time domain unit, and a first field configured in the first signaling indicates a dynamic type, the user equipment 101 determines the first PRG size according to whether PRBs scheduled by the network device 102 satisfy a first condition.

A bit value of a PRB bundling size indication field in a second signaling received from the network device 102 is a third value, and the first signaling indicates that a first bundling size setting is configured with two PRG sizes.

For implementations of step S4702, reference can be made to the relevant implementations of steps S2102 and S4102, which will not be repeated here.

In some possible implementations, the first signaling is, for example, an RRC signaling, and the second signaling is, for example, a DCI signaling.

In some possible implementations, in a case where the PRG configuration information is applicable to the SBFD time domain unit and the non-SBFD DL time domain unit, examples of the PRG configuration information in the first signaling may refer to the description of the aforementioned embodiments, which will not be repeated here.

In some possible implementations, the first field (prb-BundlingType) configured in the first signaling indicates the dynamic type, for example, indicates dynamicBundling. The second field (bundleSizeSet1) indicates that the first bundling size setting is configured with two values, i.e., two PRG sizes, for example, two n2-wideband values are configured, or two n4-wideband values are configured.

In the implementations, the bit value of the PRB bundling size indication field in the second signaling is a third value. For example, taking the PRB bundling size indication field occupying 1 bit as an example, the third value may be 1.

In some possible implementations, step S4702 may adopt the following steps S4702-1 or S4702-2.

In step S4702-1, in a case where the PRBs scheduled satisfy the first condition, it is determined that the first PRG size is a wideband PRG.

In some embodiments, the first condition is related to whether the PRBs scheduled by the network device 102 are continuous and/or a numerical count of PRBs.

In some embodiments, the first condition includes: the PRBs scheduled being continuous, and the numerical count of the PRBs scheduled being greater than a fourth value, in which the fourth value is determined according to a numerical count of RBs for the DL transmission on a BWP corresponding to the SBFD time domain unit.

In an example, the fourth value is $N_{DL,i}^{size}/2$, where $N_{DL,i}^{size}$ represents the numerical count of RBs available for the DL transmission in the BWP in the SBFD time domain unit.

In an example, as shown in FIG. 5, a numerical count of RBs where the DL frequency domain range overlaps with the BWP is the numerical count of RBs available for the DL transmission in the BWP. Frequency domain ranges unavailable for the DL transmission include frequency domain ranges corresponding to a GB and a UL subband respectively, or includes a frequency domain range corresponding to the UL subband.

In this embodiment, if the PRBs scheduled by the network device 102 are continuous and the numerical count of RBs scheduled is greater than $N_{DL,i}^{size}/2$, the first PRG size is the wideband PRG.

In an example, the PRBs scheduled being continuous includes: PRBs scheduled in a first frequency domain range are continuous, and PRBs scheduled in a second frequency domain range are continuous.

That is, in this example, the PRBs scheduled may be continuous in the first frequency domain range and the second frequency domain range respectively, and the PRBs scheduled are not required to be continuous in an entire frequency domain range.

In an example, the first PRG size in the first frequency domain range and/or the second frequency domain range is the wideband PRG.

In a case where the first PRG size in the first frequency domain range and the second frequency domain range is the wideband PRG, precoding matrices corresponding to the first frequency domain range and the second frequency domain range are the same or different.

For implementations of this example, reference can be made to the relevant implementations of the aforementioned step S4602, which will not be repeated here.

In this example, the user equipment 101 performs precoding on the PRBs scheduled in the first frequency domain range and the second frequency domain range respectively.

In step S4702-2, in a case where the PRBs scheduled do not satisfy the first condition, it is determined that the first PRG size is a first value or a second value.

In some embodiments, not satisfying the first condition includes at least one of:

the PRBs scheduled in the first frequency domain range being discontinuous;
the PRBs scheduled in the second frequency domain range being discontinuous; or
the numerical count of the PRBs scheduled being less than or equal to the fourth value.

For determining the fourth value, reference can be made to the description of the above examples, which will not be repeated here.

Optionally, not satisfying the first condition may also include that the PRBs scheduled are discontinuous.

In this embodiment, in a case where the first condition is not satisfied, for example, the scheduled PRBs are discontinuous or discontinuous within a certain frequency domain range, and the numerical count of PRBs scheduled is less than or equal to $N_{DL,i}^{size}/2$, the first PRG size is n2 or n4, that is, the first PRG is a non-wideband PRG among two values configured by the first bundling size setting indicated by the second field (bundleSizeSet1).

In some possible implementations, the method may further include step S4103. For implementations of step S4103, reference can be made to the description of the above embodiments, which will not be repeated here.

In the embodiments of the present disclosure, it is illustrated that the user equipment 101 determines whether the wideband PRG can be applied according to whether the PRBs scheduled by the network device 102 satisfies the first condition in a case where the DL transmission is performed on two DL subbands in the SBFD time domain unit.

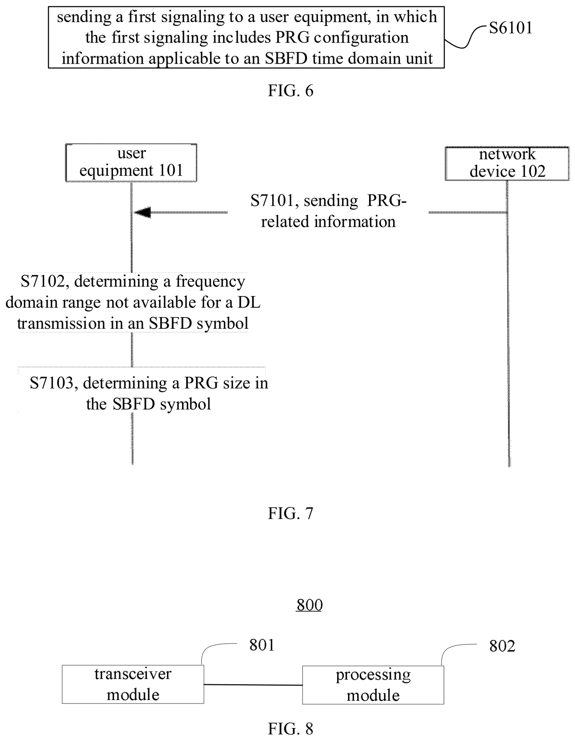

The embodiments of the present disclosure provide a method for processing communication, which is executed by a network device 102. Referring to FIG. 6, FIG. 6 illustrates a method for processing communication according to an example embodiment. As shown in FIG. 6, the method includes the following steps.

In step S6101, the network device 102 sending a first signaling to a user equipment 101, in which the first signaling includes PRG configuration information applicable to an SBFD time domain unit.

The first signaling is used by the user equipment to determine a first PRG size for a DL transmission in the SBFD time domain unit.

For implementations of step S6101, reference can made to the relevant implementations of steps S2101 and S4101, which will not be repeated here.

In some possible implementations, the SBFD time domain unit may be an SBFD symbol, or an SBFD slot. For example, in a case where a frequency domain range corresponding to a symbol includes both a DL subband and a UL subband, the symbol may be considered as the SBFD symbol. If at least one SBFD symbol is included among multiple symbols of one slot, the slot may be considered as the SBFD slot. For example, as shown in FIG. 3, slots#1-3 are SBFD slots. Optionally, if all of multiple symbols of one slot are the SBFD symbols, the slot may be considered as the SBFD slot.

In some possible implementations, the first signaling may be an RRC signaling.

In some possible implementations, the first signaling may include at least one of:

a first field;
a second field; or
a third field,
in which the first field indicates a PRG bundling type, the second field indicates a first bundling size setting, and the third field indicates a second bundling size setting.

In an example, the example of the first signaling may refer to the description of the aforementioned embodiments, which will not be repeated here.

In a case where the PRG configuration information is dedicated to the SBFD time domain unit, that is, the network device 102 is configured with two sets of PRG configuration information, the first field may be prb-BundlingType_SBFD, the second field may be bundleSizeSet1_SBFD, and the third field may be bundleSizeSet2_SBFD.

In a case where the PRG configuration information is applicable to the SBFD time domain unit and a DL time domain unit, that is, the network device 102 is configured with only one set of PRG configuration information, the first field may be prb-BundlingType, the second field may be bundleSizeSet1, and the third field may be bundleSizeSet2.

The second field may configure the first bundling size setting to one or two of {2, 4, wideband}, and the third field may configure the second bundling size setting to one of {2, 4, wideband}.

In some possible implementations, the PRG configuration information is dedicated to the SBFD time domain unit.

For embodiments in this scenario, reference can be made to the relevant implementations in the embodiments of FIG. 4b, which will not be repeated here.

In some embodiments, in a case where the first field is not configured in the first signaling, it is determined that the first PRG size is a first value.

For implementations of this embodiment, reference can be made to the relevant implementations of step S4202, which will not be repeated here.

In some embodiments, in a case where the first field configured in the first signaling indicates a static type, it is determined that the first PRG size is a second value or a wideband PRG.

For implementations of this embodiment, reference can be made to the relevant implementations of step S4202, which will not be repeated here.

In some embodiments, in a case where the first field configured in the first signaling indicates a dynamic type, the first PRG size is determined according to the second field and the third field in the first signaling and a second signaling of the network device.

For implementations of this embodiment, reference can be made to the relevant implementations of step S4202, which will not be repeated here.

In some embodiments, in a case where the first field configured in the first signaling indicates the dynamic type, the method further includes the following step S6102.

In step S6102, the network device 102 sends the second signaling to the user equipment, in which the second signaling includes or does not include a PRB bundling size indication field.

In an example, the second signaling is, for example, a DCI signaling. At this time, the first PRG size may use one of the following examples.

In a first example, in a case where a bit value of the PRB bundling size indication field in the second signaling is a third value, the user equipment 101 determines the first PRG size according to the first bundling size setting.

In this example, in a case where the PRB bundling size indication field occupies one bit, the third value may be 1, for example. This example may be used in a scenario where only one value is configured for bundleSizeSet1_SBFD. In this case, the first PRG size uses the value configured for bundleSizeSetl_SBFD.

In a second example, in a case where a bit value of the PRB bundling size indication field in the second signaling is the third value, the user equipment 101 determines the first PRG size according to the first bundling size setting, PRBs scheduled by the network device 102, and a corresponding BWP size.

In this example, the user equipment 101 determines the first PRG size according to the first bundling size setting bundleSizeSet1_SBFD. BundleSizeSet1_SBFD may be configured as one or two of {2, 4, wideband}.

If bundleSizeSet1_SBFD is configured with two values, such as n2-wideband or n4-wideband, in a case where the PRBs scheduled by the network device 102 are continuous and the numerical count of scheduled PRBs exceeds

$N_{BWP,i}^{size}/2$ , the first PRG size $P_{BWP,i}^{'}$ is the wideband PRG; otherwise the first PRG size is n2 or n4.

Optionally, if bundleSizeSet1_SBFD is configured with two values, such as n2-wideband or n4-wideband, in a case where the PRBs scheduled by the network device 102 are continuous and the numerical count of scheduled PRBs exceeds $N_{DL,i}^{size}/2$ , the first PRG size $P_{BWP,i}^{'}$ is the wideband PRG; otherwise, the first PRG size is n2 or n4, where $N_{DL,i}^{size}$ represents the numerical count of PRBs included in the frequency domain range available for the DL transmission in the SBFD time domain unit.

Optionally, the SBFD time domain unit includes a first frequency domain range and a second frequency domain range for the DL transmission, in which there is a discontinuity between the first frequency domain range and the second frequency domain range. If bundleSizeSet1_SBFD is configured with two values, such as n2-wideband or n4-wideband, in a case where the PRBs scheduled by the network device 102 are continuous in the first frequency domain range and continuous in the second frequency domain range, and the numerical count of scheduled PRBs exceeds $N_{DL,i}^{size}/2$ , the first PRG size $P_{BWP,i}^{'}$ is the wideband PRG; otherwise, the first PRG size is n2 or n4, where $N_{DL,i}^{size}$ represents the numerical count of PRBs included in the frequency domain range available for the DL transmission in the SBFD time domain unit. It may be understood that in a case of determining whether the numerical count of PRBs scheduled exceeds $N_{DL,i}^{size}/2$ , the numerical count of PRBs scheduled includes a sum of the numerical count of PRBs scheduled in the first frequency domain range and the numerical count of PRBs scheduled in the second frequency domain range.

In an example, as shown in FIG. 5, a numerical count of RBs where the DL frequency domain range overlaps with the BWP is a numerical count of RBs in the BWP available for the DL transmission. The frequency domain range not available for the DL transmission includes frequency domain ranges corresponding to the GB and the UL subband, or includes a frequency domain range corresponding to the UL subband.

In a third example, in a case where the second signaling does not includes the PRB bundling size indication field, the first PRG size is determined according to the second bundling size setting.

In this example, in a case where the PRB bundling size indication field does not exist, that is, the PRB bundling size indication field occupies 0 bit, the user equipment 101 determines the first PRG size according to the second bundling size setting bundleSizeSet2_SBFD. BundleSizeSet2_SBFD may be configured as one of {2, 4, wideband}.

In some possible implementations, the PRG configuration information is applicable to the SBFD time domain unit and a non-SBFD DL time domain unit.

For embodiments in this scenario, reference can be made to the relevant implementation methods in the embodiments of FIGS. 4c to 4f, which will not be repeated here.

In some embodiments, in a case where a second PRG size of the non-SBFD DL time domain unit is a wideband PRG, it is determined that the first PRG size is a first value.

In some embodiments, in a case where a second PRG size of the non-SBFD DL time domain unit is a wideband PRG, the first PRG size is determined according to a configuration of the first field in the first signaling.

In an example, the first PRG size satisfies one of:

in a case where the first field configured in the first signaling indicates the static type, determining that the first PRG size is a first value or a second value;
in a case where the first field configured in the first signaling indicates the dynamic type, and the second signaling received does not include the PRB bundling size indication field, determining that the first PRG size is a first value or a second value; or
in a case where the first field configured in the first signaling indicates the dynamic type, and the bit value of a PRB bundling size indication field in the second signaling is a third value, determining that the first PRG size is a first value or a second value.

In some embodiments, in a case where a second PRG size of the DL time domain unit is the wideband PRG, it is determined that the first PRG size is a minimum value between a VRB bundling size and an RBG size.

In some embodiments, the SBFD time domain unit includes a first frequency domain range and a second frequency domain range for the DL transmission; and

in a case where a second PRG size of the DL time domain unit is the wideband PRG, it is determined that the first PRG size in the first frequency domain range and/or the second frequency domain range is the wideband PRG, in which the first frequency domain range and the second frequency domain range are discontinuous.

In some possible implementations, the PRG configuration information is applicable to the SBFD time domain unit and the non-SBFD DL time domain unit. In a case where the first field configured in the first signaling indicates a dynamic type, the first PRG size is determined according to whether a PRB scheduled by the network device satisfies a first condition.

A bit value of a PRB bundling size indication field in a second signaling sent is a third value, and the first signaling indicates that the first bundling size setting configures two PRG sizes.

Optionally, for embodiments in this scenario, reference can be made to the relevant implementations in the embodiments of FIG. 4g, which will not be repeated here.

In some embodiments, in a case where the PRBs scheduled satisfy the first condition, it is determined that the first PRG is a wideband PRG; and

in a case where the PRBs scheduled do not satisfy the first condition, it is determined that the first PRG size is a first value or a second value.

In some embodiments, the first condition includes:

the PRBs scheduled being continuous, and a numerical count of the PRBs scheduled being greater than a fourth value,

in which the fourth value is determined according to a numerical count of RBs for the DL transmission on a BWP corresponding to the SBFD time domain unit.

In an example, the PRBs scheduled being continuous includes:

PRBs scheduled in a first frequency domain range being continuous, and PRBs scheduled in a second frequency domain range being continuous.

In some embodiments, the first PRG size in the first frequency domain range and/or the second frequency domain range is the wideband PRG; and

in a case where the first PRG size in the first frequency domain range and the second frequency domain range is the wideband PRG, precoding matrices corresponding to the first frequency domain range and the second frequency domain range are the same or different.

In some embodiments, not satisfying the first condition includes at least one of:

PRBs scheduled in a first frequency domain range being discontinuous;
PRBs scheduled in a second frequency domain range being discontinuous; or
a numerical count of the PRBs scheduled being less than or equal to the fourth value.

In some possible implementations, the first signaling further includes information indicating a third frequency domain range, and the third frequency domain range is not available for the DL transmission.

In an example, the third frequency domain range includes at least one of:

a frequency domain range for a UL transmission; or
a frequency domain range corresponding to a GB.

In the embodiments of the present disclosure, the network device 102 configures the PRG configuration information applicable to the SBFD time domain unit via the first signaling, to provide the reference configuration for determining the first PRG size in the SBFD scenario. Therefore, the user equipment 101 may more accurately determine the first PRG size of the SBFD time domain unit according to the PRG configuration information, which is beneficial to improving the accuracy of data transmission during the transmission of the SBFD time domain unit.

In order to facilitate understanding of the embodiments of the present disclosure, some specific examples are listed below.

As shown in FIG. 7, the method of this embodiment may include the following steps.

In step S7101, a network device 102 sends PRG-related information to a user equipment 101.

In some embodiments, the network device 102 may send the PRG-related information via an RRC configuration and/or a DCI indication.

In some embodiments, the PRG-related information may correspond to the PRG configuration information in the aforementioned embodiments.

In some embodiments, the RRC configuration may correspond to the first signaling in the aforementioned embodiments, and the DCI indication may correspond to the second signaling in the aforementioned embodiments.

In step S7202, the user equipment 101 receives the RRC configuration and/or the DCI indication, and determines a frequency domain range not available for a DL transmission in an SBFD symbol.

In some embodiments, the frequency domain range not available for the DL transmission corresponds to the third frequency domain range in the aforementioned embodiments.

Optionally, the frequency domain range not available for the DL transmission includes frequency domain ranges of a GB subband and a UL subband;

Optionally, the frequency domain range not available for the DL transmission includes the frequency domain range of the UL subband.

In step S7203, the user equipment 101 receives the RRC configuration and/or the DCI indication, and determines a PRG size in the SBFD symbol.

In some embodiments, the PRG size corresponds to the first PRG size in the aforementioned embodiments.

In the implementations of steps S7101 to S7103, the method includes the following implementations.

Example 1:

The RRC adds a set of PRG-related information for an SBFD slot, and in a case where a PDSCH is in the SBFD slot, the PRG size is determined according to PRG configuration information and/or DCI indication information of the SBFD slot configured by the RRC.

For example:

```
prb-BundlingType_SBFD                       CHOICE {
        staticBundling_SBFD                 SEQUENCE {
        bundleSize_SBFD                     ENUMERATED { n4, wideband }
        },
        dynamicBundling_SBFD                        SEQUENCE {
            bundleSizeSet1_SBFD                         ENUMERATED { n4,
    wideband, n2-wideband, n4-wideband }
            bundleSizeSet2_SBFD                         ENUMERATED { n4,
    wideband }
        }
    },
```

The implementation of Example 1 may correspond to the description of the relevant embodiments of FIG. 4b, which will not be repeated here.

Example 2:

The RRC configures only one set of PRG-related information for a DL slot and the SBFD slot. In the SBFD slot, in a case where a DL PRB allocated to a UE is in a frequency domain range 1 and a frequency domain range 2 available for the DL transmission, and there is discontinuity in the frequency domain between the frequency domain range 1 and the frequency domain range 2:

Example 2-1:

According to the RRC configuration and the DCI indication, if a PRG size of the DL slot is a wideband PRG, the SBFD slot has a different understanding of the PRG size than the DL slot.

In this embodiment, the following situations may be included.

Example 2-1-1: the PRG size of the SBFD slot is n2.

The implementation of Example 2-1-1 may correspond to the description of the relevant embodiments of FIG. 4c, which will not be repeated here.

Example 2-1-2: in the following case1, case2-1, case2-2, and case2-3, the PRG size of the SBFD slot is n4 or n2, and at least one of the PRG size is n4.

Case1: prb-BundlingType is a static type.

Case 2: prb-BundlingType is a dynamic type, and the RRC configures bundleSizeSet1 and bundleSizeSet2.

Case 2-1: a PRB bundling size indicator field in DCI 1-1 is 0 bit/does not exist.

Case 2-2: the PRB bundling size indicator field in the DCI 1-1 is 1 bit, and bundleSizeSet1 is configured with one $P'_{BWP,i}$ .

Case 2-3: the PRB bundling size indicator field in the DCI 1-1 is 1 bit, and bundleSizeSet1 is configured with two $P'_{BWP,i}$ .

Optionally, $P'_{BWP,i}$ is the remaining one of the two $P'_{BWP,i}$ configured by bundleSizeSet1 after removing the wideband PRG.

prb-BundlingType corresponds to a first field in the aforementioned embodiments, static corresponds to the static type in the aforementioned embodiments, dynamic corresponds to the dynamic type in the aforementioned embodiments, bundleSizeSet1 corresponds to the second field in the aforementioned embodiments, and bundleSizeSet2 corresponds to the third field in the aforementioned embodiments.

The DCI 1-1 corresponds to the second signaling in the aforementioned embodiments, and the PRB bundling size indicator field corresponds to the PRB bundling size indicator field in the aforementioned embodiments.

The implementations of Example 2-1-2 may correspond to the description of the relevant embodiments of FIG. 4d, which will not be repeated here.

Example 2-1-3: the PRG size of the SBFD slot is a minimum value between a VRB bundle size and a RBG size.

The VRB bundle size is determined according to an RRC parameter vrb-ToPRB-Interleaver, and the VRB bundle size is 2 by default in a case where the RRC parameter vrb-ToPRB-Interleaver is not configured.

The RBG size is determined jointly according to a numerical count of PRBs included in the BWP and a parameter rbg-Size in a cell PDSCH-config of an RRC configuration.

The VRB bundle size and the RBG size may also be determined by other means.

The implementations of Example 2-1-3 may correspond to the description of the relevant embodiments of FIG. 4e, which will not be repeated here.

Example 2-2:

According to the RRC configuration and the DCI indication, the PRG size of the DL slot and the SBFD slot is the wideband PRG.

The UE does not expect that the PRBs scheduled are discontinuous in the frequency domain range 1 or the frequency domain range 2 (the UE expects that the PRBs scheduled are continuous in the frequency domain range 1 and the frequency domain range 2).

The UE performs wideband precoding on the PRBs scheduled in the frequency domain range 1 and the frequency domain range 2 respectively, in which precoding matrices in the frequency domain range 1 and the frequency domain range 2 may be different.

The implementations of Example 2-2 may correspond to the description of the relevant embodiments of FIG. 4f, which will not be repeated here.

Example 2-3:

If prb-BundlingType is dynamic, a value of the PRB bundling size indicator field in the DCI 1-1 is 1, and bundleSizeSet1 is configured with two $P'_{BWP,i}$ (n2-wideband or n4-wideband):

Example 2-3-1: if the PRBs scheduled are continuous and the numerical count of PRBs scheduled exceeds $PN^{size}_{DL,i}/2$ , $P'_{BWP,i}$ is wideband, otherwise, $P'_{BWP,i}$ is n2/n4. $N^{size}_{DL,i}/2$ represents a numerical count of RBs in the BWP available for the DL transmission in the SBFD slot, and the numerical count of RBs in which the DL frequency domain range overlaps with the BWP is the numerical count of RBs in the BWP available for the DL transmission. in the following Optional Example 1 and Optional Example 2:

Optional Example 1: the frequency domain range not available for the DL transmission includes frequency domain ranges of the GB subband and the UL subband.

Optional Example 2: the frequency domain range not available for the DL transmission includes the frequency domain range of the UL subband.

Example 2-3-2: in the SBFD slot, the DL PRB allocated to the UE is in the frequency domain range 1 and the frequency domain range 2 available for the DL transmission, and the frequency domain range 1 and the frequency domain range 2 are discontinuous in the frequency domain. If the PRBs scheduled are continuous in the frequency domain range 1 and the frequency domain range 2 respectively, and the numerical count of PRBs scheduled exceeds $N^{size}_{DL,i}/2$ , $P'_{BWP,i}$

is wideband, otherwise, $P'_{BWP,i}$ is n2/n4. $N^{size}_{DL,i}/2$ represents the numerical count of RBs in the BWP available for the DL transmission in the SBFD slot, and the numerical count of RBs in which the DL frequency domain range overlaps with the BWP is the numerical count of RBs in the BWP available for the DL transmission. In the following Optional Example 1 and Optional Example 2:

Optional Example 1: the frequency domain range not available for the DL transmission includes the frequency domain ranges of the GB subband and the UL subband.

Optional Example 2: the frequency domain range not available for the DL transmission includes the frequency domain range of the UL subband.

The implementations of Example 2-3 may correspond to the description of the relevant embodiments of FIG. 4g, which will not be repeated here.

Example 3:

The method for determining the PRG size may apply the existing protocol, and the PRB in the PRG that overlaps with the frequency domain range available for the DL transmission is the PRB included in the PRG available for the DL transmission.

For implementations of Example 3, reference can be made to the related implementations of step S4103, which will not be repeated here.

For example, as shown in FIG. 5, the GB subband and the UL subband are not available for the DL transmission, and the PRG of the BWP includes PRG#0, #1, #2, #3, #4, #5, #6, #7, #8, #9, #10, #11, #12, then:

the PRBs in the PRG #0, #1, #2, #3, #9, #10, #11, #12 are all PRBs available for the DL transmission;
a first PRB in the PRG#4 is a PRB available for the DL transmission;
a last PRB in the PRG#8 is a PRB available for the DL transmission; and
a numerical count of PRBs available for the DL transmission in the PRG#5, #6, and #7 is 0.

In the embodiments of the present disclosure, the method for determining the PRG size in a case where the PRG is configured/indicated as the wideband in the SBFD slot is different from the method for determining the PRG size in a case where the DL slot is configured/indicated as the wideband. Furthermore, in a case where the PRG type is configured as the dynamic type, the condition that the SBFD slot uses the wideband is different from that of the DL slot, and the numerical count of PRBs included in the PRG is also different from that in the DL slot scenario. In embodiments of the present disclosure, the scenario in which the wideband is applied can be extended.

Based on the same concept as the above-described method embodiments, the embodiments of the present disclosure further provide a first communication apparatus that may have a function of the user equipment 101 in the above-described method embodiments and may be configured to perform the steps performed by the user equipment 101 provided by the above-described method embodiments. The function may be implemented in a form of hardware, in a form of software or in the form of hardware executing corresponding software. The hardware or software includes one or more modules corresponding to the function described above.

In a possible implementation, FIG. 8 shows a first communication apparatus 800 which may be served as the user equipment 101 involved in the above-described method embodiments and perform the steps performed by the user equipment 101 in the above-described method embodiments. As shown in FIG. 8, the first communication apparatus 800 may include a transceiver module 801 and a processing module 802 coupled to each other. The transceiver module 801 may be configured to support the first communication apparatus 800 to perform communication, and the processing module 802 may be configured to support the first communication apparatus 800 to perform processing operations in the above-described method embodiments, for example, generating signals and information to be sent.

In a case of executing the steps implemented by the user equipment 101, the transceiver module 801 is configured to receive a first signaling sent by a network device, in which the first signaling includes PRG configuration information applicable to an SBFD time domain unit

The processing module 802 is configured to determine, according to the first signaling, a first PRG size for a DL transmission in the SBFD time domain unit.

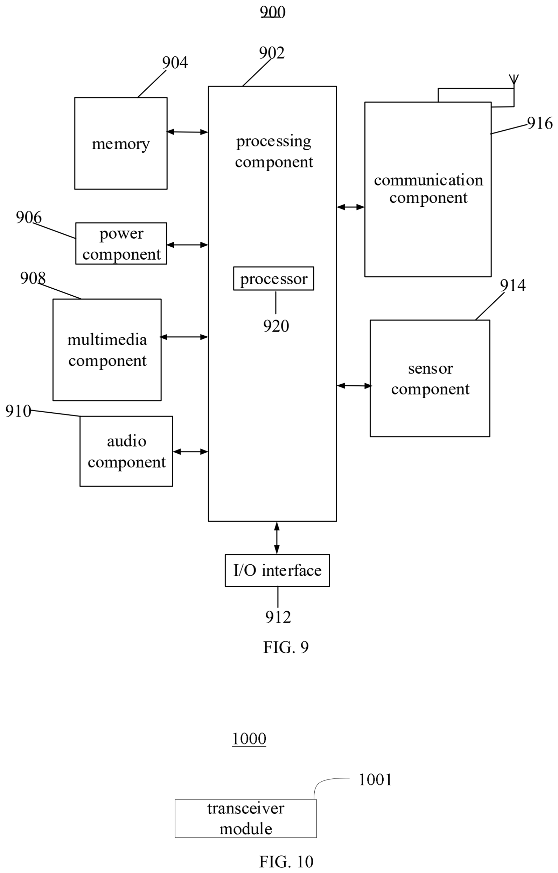

In the case that the device is the user equipment 101, it is also possible for the apparatus to have a structure as shown in FIG. 9. Referring to FIG. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, phone calls, data communications, camera operations, and recording operations. The processing component 902 may include one or more processors 920 to execute instructions to perform all or some of the steps in the above-described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, videos, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and/or the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone (MIC) configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as keyboards, click wheels, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900, relative positioning of components, e.g., the display and the keypad, of the device 900, a change in position of the device 900 or a component of the device 900, a presence or absence of user contact with the device 900, an orientation or an acceleration/deceleration of the device 900, and a change in temperature of the device 900. The sensor component 914 may include a proximity sensor configured to detect the presence of nearby objects without any physical contact. The sensor component 914 may further include a light sensor, such as a CMOS or CCD image sensor, for use in imaging applications. In some embodiments, the sensor component 914 may further include an accelerometer sensor, a gyroscope sensor, a magnetic sensor, a pressure sensor, or a temperature sensor.

The communication component 916 is configured to facilitate communication, wired or wireless, between the device 900 and other devices. The device 900 may access a wireless network based on a communication standard, such as Wi-Fi, 2G, or 3G, or a combination thereof. In an illustrative embodiment, the communication component 916 receives a broadcast signal or broadcast associated information from an external broadcast management system via a broadcast channel. In an illustrative embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned method.

In an example embodiment, there is also provided a non-transitory computer readable storage medium including instructions (such as the memory 904 including instructions) that, executable by the processor 920 in the device 900, cause the processor 920 to perform the above-mentioned method. For example, the non-transitory computer-readable storage medium may be a ROM, a random access memory (RAM), a CD-ROM, a magnetic tape, a floppy disc, an optical data storage device, and the like.

Based on the same concept as the above-described method embodiments, an embodiment of the present disclosure further provides a second communication apparatus, which may have the function of the network device 102 in the above-described method embodiment, and may be used to execute the steps executed by the network device 102 provided in the above-described method embodiments. The function may be implemented by hardware, or may be implemented by software or by hardware executing corresponding software. The hardware or software includes one or more modules corresponding to the functions described above.

In a possible implementation, the apparatus 1000 as shown in FIG. 10 may serve as the network device 102 according to the above-described method embodiments, and perform the steps performed by the network device 102 in the above-described method embodiments. As shown in FIG. 10, the apparatus 1000 may include a transceiver module 1001, in which the transceiver module 1001 may be used to support the communication device to communicate.

In a case of executing the steps performed by the network device 102, the transceiver module 1001 is configured to send a first signaling to a user equipment, in which the first signaling includes PRG configuration information applicable to an SBFD time domain unit, and the first signaling is used by the user equipment to determine a first PRG size for a DL transmission in the SBFD time domain unit.

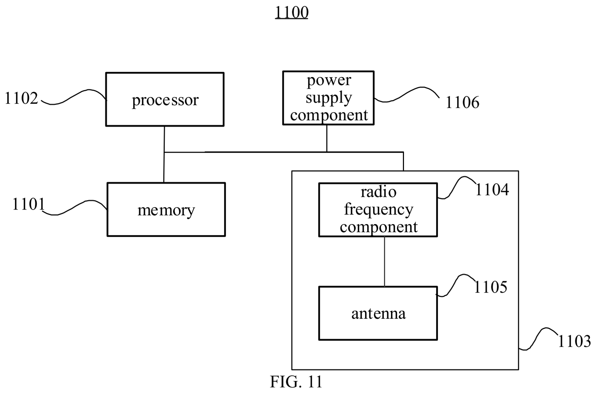

In the case that the device is the network device 102, it is also possible for the device to have a structure as shown in FIG. 11. The structure of the communication device will be described using a base station as an example. As shown in FIG. 11, the device 1100 includes a memory 1101, at least one processor 1102, a transceiver component 1103, and a power supply component 1106. The memory 1101 is coupled to the processor 1102, and may be used to store programs and data necessary for the communication device 1100 to implement various functions. The processor 1102 is configured to support the communication device 1100 to perform corresponding functions in the above-described methods, which may be implemented by calling a program stored in the memory 1101. The transceiver component 1103 may be a wireless transceiver and may be used to support the communication device 1100 to receive signaling and/or data and send signaling and/or data over a new radio. The transceiver component 1103 may also be referred to as a transceiver unit or a communication unit, and may include a radio frequency component 1104, which may be a remote radio unit (RRU) specifically for transmitting radio frequency signals and converting the radio frequency signals to baseband signals, and one or more antennas 1105 specifically for radiating and receiving the radio frequency signals.

In a case where the second communication device 1100 needs to send data, the processor 1102 may perform baseband processing on the data to be sent, and then output a baseband signal to a radio frequency unit, and the radio frequency unit performs radio processing on the baseband signal and then sends the radio frequency signal in a form of electromagnetic waves through an antenna. In a case where data is sent to the communication device 1100, the radio frequency unit receives the radio frequency signal through the antenna, converts the radio frequency signal into the baseband signal, and outputs the baseband signal to the processor 1102, and the processor 1102 converts the baseband signal into data and processes the data.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

INDUSTRIAL APPLICABILITY

In the method of the present disclosure, a user equipment obtains PRG configuration information applicable to an SBFD time domain unit by receiving a first signaling sent by a network device. Therefore, in an SBFD scenario, the user equipment may accurately determine a first PRG size according to a reasonable PRG parameter configuration, which is beneficial to improving the accuracy of data transmission during a transmission of the SBFD time domain unit.

**Claims**

1. A method for processing communication, performed by a user equipment, comprising:

   receiving a first signaling sent by a network device, wherein the first signaling comprises precoding resource block group (PRG) configuration information applicable to a subband full duplex (SBFD) time domain unit; and
   determining, according to the first signaling, a first PRG size for a downlink (DL) transmission in the SBFD time domain unit.

2. The method of claim 1, wherein determining, according to the first signaling, the first PRG size for the DL transmission in the SBFD time domain unit comprises:

   determining the first PRG size according to a configuration of a first field in the first signaling, wherein the PRG configuration information is dedicated to the SBFD time domain unit, and the first field indicates a PRG bundling type.

3. The method of claim 2, wherein determining the first PRG size according to the configuration of the first field in the first signaling comprises:
   in a case where the first field is not configured in the first signaling, determining that the first PRG size is a first value.

4. The method of claim 2, wherein determining the first PRG size according to the configuration of the first field in the first signaling comprises:
   in a case where the first field configured in the first signaling indicates a static type, determining that the first PRG size is a second value or a wideband PRG.

5. The method of claim 2, wherein determining the first PRG size according to the configuration of the first field in the first signaling comprises:

   in a case where the first field configured in the first signaling indicates a dynamic type, determining the first PRG size according to a second field and a third field in the first signaling, and a second signaling of the network device, wherein the second field indicates a first bundling size setting and the third field indicates a second bundling size setting, and the second signaling comprises or does not comprise a physical resource block (PRB) bundling size indication field.

6. The method of claim 5, wherein determining the first PRG size according to the second field and the third field in the first signaling and the second signaling of the network device comprises one of:

   in a case where the second signaling comprises the PRB bundling size indication field, and a bit value of the PRB bundling size indication field is a third value, determining the first PRG size according to the first bundling size setting;
   in a case where the second signaling comprises the PRB bundling size indication field, and a bit value of the PRB bundling size indication field is a third value, determining the first PRG size according to the first bundling size setting, PRBs scheduled by the network device, and a corresponding bandwidth part (BWP) size; or
   in a case where the second signaling does not comprises the PRB bundling size indication field, determining the first PRG size according to the second bundling size setting.

7. The method of claim 1, wherein
   the PRG configuration information is applicable to the SBFD time domain unit and a non-SBFD DL time domain unit.

8. The method of claim 7, wherein determining, according to the first signaling, the first PRG size for the DL transmission in the SBFD time domain unit comprises:
   determining, according to the first signaling, that a second PRG size of the non-SBFD DL time domain unit is a wideband PRG, and determining that the first PRG size is a first value.

9. The method of claim 7, wherein determining, according to the first signaling, the first PRG size for the DL transmission in the SBFD time domain unit comprises:
   determining, according to the first signaling, that a second PRG size of the non-SBFD DL time domain unit is a wideband PRG, and determining the first PRG size according to a configuration of a first field in the first signaling.

10. The method of claim 9, wherein determining the first PRG size according to the configuration of the first field in the first signaling comprises one of:

    in a case where the first field configured in the first signaling indicates a static type, determining that the first PRG size is a first value or a second value;
    in a case where the first field configured in the first signaling indicates a dynamic type, and a second signaling received does not comprises a PRB bundling size indication field, determining that the first PRG size is a first value or a second value; or

in a case where the first field configured in the first signaling indicates a dynamic type, and a bit value of a PRB bundling size indication field in a second signaling is a third value, determining that the first PRG size is a first value or a second value.

11. The method of claim 7, wherein determining, according to the first signaling, the first PRG size for the DL transmission in the SBFD time domain unit comprises:
determining, according to the first signaling, that a second PRG size of the non-SBFD DL time domain unit is a wideband PRG, and determining that the first PRG size is a minimum value between a virtual resource block (VRB) bundling size and a resource block group (RBG) size.

12. The method of claim 7, wherein

the SBFD time domain unit comprises a first frequency domain range and a second frequency domain range for the DL transmission; and
determining, according to the first signaling, the first PRG size for the DL transmission in the SBFD time domain unit comprises:

determining, according to the first signaling, that a second PRG size of the non-SBFD DL time domain unit is a wideband PRG, and determining that the first PRG size is a wideband PRG in the first frequency domain range and/or the second frequency domain range,
wherein there is a discontinuity between the first frequency domain range and the second frequency domain range.

13. The method of claim 12, wherein
in a case where the first PRG size is the wideband PRG in the first frequency domain range and the second frequency domain range, precoding matrices corresponding to the first frequency domain range and the second frequency domain range are the same or different.

14. The method of claim 7, wherein determining, according to the first signaling, the first PRG size for the DL transmission in the SBFD time domain unit comprises:

in a case where a first field configured in the first signaling indicates a dynamic type, determining the first PRG size according to whether PRBs scheduled by the network device satisfy a first condition,
wherein a bit value of a PRB bundling size indication field in a second signaling received from the network device is a third value, and the first signaling indicates that a first bundling size setting is configured with two PRG sizes.

15. The method of claim 14, wherein determining the first PRG size according to whether the PRBs scheduled by the network device satisfy the first condition comprises one of:

in a case where the PRBs scheduled satisfy the first condition, determining that the first PRG size is a wideband PRG; or
in a case where the PRBs scheduled do not satisfy the first condition, determining that the first PRG size is a first value or a second value.

16. The method of claim 15, wherein the first condition comprises:

the PRBs scheduled being continuous, and a numerical count of the PRBs scheduled being greater than a fourth value,
wherein the fourth value is determined according to a numerical count of resource blocks (RB) for the DL transmission on a BWP corresponding to the SBFD time domain unit.

17. The method of claim 16, wherein the PRBs scheduled being continuous comprises: PRBs scheduled in a first frequency domain range being continuous, and PRBs scheduled in a second frequency domain range being continuous.

18. The method of claim 17, wherein

the first PRG size in the first frequency domain range and/or the second frequency domain range is the wideband PRG; and
in a case where the first PRG size in the first frequency domain range and the second frequency domain range is the wideband PRG, precoding matrices corresponding to the first frequency domain range and the second frequency domain range are the same or different.

19. The method of claim 15 or 16, wherein not satisfying the first condition comprises at least one of:

PRBs scheduled in a first frequency domain range being discontinuous;
PRBs scheduled in a second frequency domain range being discontinuous; or
a numerical count of the PRBs scheduled being less than or equal to the fourth value.

20. The method of any one of claims 1 to 19, wherein
the first signaling further comprises information indicating a third frequency domain range, and the third frequency domain range is not available for the DL transmission.

21. The method of claim 20, wherein the third frequency domain range comprises at least one of:

a frequency domain range for an uplink (UL) transmission; or
a frequency domain range corresponding to a guard band (GB).

22. The method of any one of claims 1 to 20, further comprising:
determining, according to the first PRG size of the SBFD time domain unit, a numerical count of PRBs for the DL transmission among all PRGs within the BWP.

23. A method for processing communication, performed by a network device, comprising:
sending a first signaling to a user equipment, wherein the first signaling comprises precoding resource block group (PRG) configuration information applicable to a subband full duplex (SBFD) time domain unit, and the first signaling is used by the user equipment to determine a first PRG size for a downlink (DL) transmission in the SBFD time domain unit.

24. The method of claim 23, wherein the first signaling comprises at least one of:

a first field;
a second field; or
a third field,
wherein the first field indicates a PRG bundling type, the second field indicates a first bundling size setting, and the third field indicates a second bundling size setting.

25. The method of claim 24, wherein the PRG configuration information is dedicated to the SBFD time domain unit.

26. The method of claim 25, wherein in a case where the first field is not configured in the first signaling, it is determined that the first PRG size is a first value.

27. The method of claim 25, wherein in a case where the first field configured in the first signaling indicates a static type, it is determined that the first PRG size is a second value or a wideband PRG.

28. The method of claim 25, wherein in a case where the first field configured in the first signaling indicates a dynamic type, the first PRG size is determined according to the second field and the third field in the first signaling, and a second signaling of the network device.

29. The method of claim 28, further comprising:
sending the second signaling to the user equipment, wherein the second signaling comprises or does not comprise a physical resource block (PRB) bundling size indication field.

30. The method of claim 24, wherein the PRG configuration information is applicable to the SBFD time domain unit and a non-SBFD DL time domain unit.

31. The method of claim 30, wherein in a case where a second PRG size of the non-SBFD DL time domain unit is a wideband PRG, it is determined that the first PRG size is a first value.

32. The method of claim 30, wherein in a case where a second PRG size of the non-SBFD DL time domain unit is a wideband PRG, the first PRG size is determined according to a configuration of the first field in the first signaling.

33. The method of claim 32, wherein

in a case where the first field configured in the first signaling indicates a static type, it is determined that the first PRG size is a first value or a second value;
in a case where the first field configured in the first signaling indicates a dynamic type, and a second signaling received does not comprise a PRB bundling size indication field, it is determined that the first PRG size is a first value or a second value; or
in a case where the first field configured in the first signaling indicates a dynamic type, and a bit value of a PRB bundling size indication field in a second signaling is a third value, it is determined that the first PRG size is a first value or a second value.

34. The method of claim 30, wherein in a case where a second PRG size of the non-SBFD DL time domain unit is a wideband PRG, it is determined that the first PRG size is a minimum value between a virtual resource block (VRB) bundling size and a resource block group (RBG) size.

35. The method of claim 30, wherein the SBFD time domain unit comprises a first frequency domain range and a second frequency domain range for the DL transmission; and
in a case where a second PRG size of the non-SBFD DL time domain unit is a wideband PRG, it is determined that the first PRG size is the wideband PRG in the first frequency domain range and/or the second frequency domain range, wherein there is a discontinuity between the first frequency domain range and the second frequency domain range.

36. The method of claim 30, wherein

in a case where the first field configured in the first signaling indicates a dynamic type, the first PRG size is determined according to whether PRBs scheduled by the network device satisfy a first condition, and
a bit value of a PRB bundling size indication field in a second signaling sent is a third value, and the first signaling indicates that the first bundling size setting configures two PRG sizes.

37. The method of claim 36, wherein

in a case where the PRBs scheduled satisfy the first condition, it is determined that the first PRG is a wideband PRG; and
in a case where the PRBs scheduled do not satisfy the first condition, it is determined that the first PRG size is a first value or a second value.

38. The method of claim 37, wherein the first condition comprises:

the PRBs scheduled being continuous, and a numerical count of the PRBs scheduled being greater than a fourth value,
wherein the fourth value is determined according to a numerical count of resource blocks (RB) for the DL transmission on a bandwidth part (BWP) corresponding to the SBFD time domain unit.

39. The method of claim 38, wherein the PRBs scheduled being continuous comprises:
PRBs scheduled in a first frequency domain range being continuous, and PRBs scheduled in a second frequency domain range being continuous.

40. The method of claim 39, wherein

the first PRG size in the first frequency domain range and/or the second frequency domain range is the wideband PRG; and
in a case where the first PRG size in the first frequency domain range and the second frequency domain range is the wideband PRG, precoding matrices corresponding to the first frequency domain range and the second frequency domain range are the same or different.

41. The method of claim 37 or 38, wherein not satisfying the first condition comprises at least one of:

PRBs scheduled in a first frequency domain range being discontinuous;
PRBs scheduled in a second frequency domain range being discontinuous; or
a numerical count of the PRBs scheduled being less than or equal to the fourth value.

42. The method of any one of claims 23 to 41, wherein
the first signaling further comprises information indicating a third frequency domain range, and the third frequency domain range is not available for the DL transmission.

43. The method of claim 42, wherein the third frequency domain range comprises at least one of:

a frequency domain range for an uplink (UL) transmission; or
a frequency domain range corresponding to a guard band (GB).

44. A first communication apparatus, comprising:

a transceiver module, configured to receive a first signaling sent by a network device, wherein the first signaling comprises precoding resource block group (PRG) configuration information applicable to a subband full duplex (SBFD) time domain unit; and
a processing module, configured to determine, according to the first signaling, a first PRG size for a downlink (DL) transmission in the SBFD time domain unit.

45. A second communication apparatus, comprising:
a transceiver module, configured to send a first signaling to a user equipment, wherein the first signaling comprises precoding resource block group (PRG) configuration information applicable to a subband full duplex (SBFD) time domain unit, and the first signaling is used by the user equipment to determine a first PRG size for a downlink (DL) transmission in the SBFD time domain unit.

46. A communication device, comprising:

one or more processors,
wherein the processor is configured to invoke instructions to cause the communication device to perform the method of any one of claims 1 to 22 or 23 to 43.

47. A computer-readable storage medium having stored therein instructions that, when invoked and executed by a computer, cause the computer to perform the method of any one of claims 1 to 22 or 23 to 43.

FIG. 1

FIG. 2

FIG. 3

receiving a first signaling sent by a network device, in which the first signaling includes PRG configuration information applicable to an SBFD time domain unit — S4101

determining, according to the first signaling, the first PRG size for the DL transmission in the SBFD time domain unit — S4102

FIG. 4a

receiving a first signaling sent by a network device, in which the first signaling includes PRG configuration information applicable to an SBFD time domain unit — S4201

determining a first PRG size for a DL transmission according to a configuration of a first field in the first signaling — S4202

FIG. 4b

receiving a first signaling sent by a network device, in which the first signaling includes PRG configuration information applicable to an SBFD time domain unit — S4301

determining that a first PRG size is a first value — S4302

FIG. 4c

receiving a first signaling sent by a network device, in which the first signaling includes PRG configuration information applicable to an SBFD time domain unit — S4401

determining the first PRG size according to a configuration of a first field in the first signaling — S4402

FIG. 4d

| receiving a first signaling sent by a network device, in which the first signaling includes PRG configuration information applicable to an SBFD time domain unit | S4501 |

↓

| determining that the first PRG size is a minimum value between a virtual resource block (VRB) bundling size and an RBG size | S4502 |

FIG. 4e

| receiving a first signaling sent by a network device, in which the first signaling includes PRG configuration information applicable to an SBFD time domain unit | S4601 |

↓

| determining that a first PRG size is a wideband PRG in a first frequency domain range and/or a second frequency domain range | S4602 |

FIG. 4f

| receiving a first signaling sent by a network device, in which the first signaling includes PRG configuration information applicable to an SBFD time domain unit | S4701 |

↓

| in a case where the PRG configuration information is applicable to the SBFD time domain unit and a non-SBFD DL time domain unit, and a first field configured in the first signaling indicates a dynamic type, determining the first PRG size according to whether PRBs scheduled by the network device satisfy a first condition | S4702 |

FIG. 4g

FIG. 5

sending a first signaling to a user equipment, in which the first signaling includes PRG configuration information applicable to an SBFD time domain unit — S6101

FIG. 6

user equipment 101

network device 102

S7101, sending PRG-related information

S7102, determining a frequency domain range not available for a DL transmission in an SBFD symbol

S7103, determining a PRG size in the SBFD symbol

FIG. 7

800

801

transceiver module

802

processing module

FIG. 8

900

904

902

916

memory

processing
component

communication
component

906

power
component

processor

920

908

multimedia
component

914

sensor
component

910

audio
component

I/O interface

912

FIG. 9

1000

1001

transceiver
module

FIG. 10

1100

```
                                    ┌──────────────┐
                 ┌─────────────┐    │    power     │
          1102 ⌇ │  processor  │    │    supply    │ ⌇ 1106
                 └─────────────┘    │  component   │
                                    └──────────────┘

                 ┌─────────────┐    ┌──────────────────────────┐
                 │             │    │  ┌──────────────┐         │
          1101 ⌇ │   memory    │    │  │    radio     │ ⌇ 1104  │
                 │             │    │  │  frequency   │         │
                 └─────────────┘    │  │  component   │         │
                                    │  └──────────────┘         │
                                    │                           │
                                    │  ┌──────────────┐ ⌇ 1105  │
                                    │  │              │         │
                                    │  │   antenna    │         │
                                    │  │              │         │ ⌇ 1103
                                    │  └──────────────┘         │
                                    └──────────────────────────┘
```

FIG. 11

## INTERNATIONAL SEARCH REPORT

| International application No. |
| --- |
| **PCT/CN2023/091184** |

| A. | CLASSIFICATION OF SUBJECT MATTER |
| --- | --- |

H04W 72/23(2023.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, VEN, WOTXT, EPTXT, USTXT, CNKI, 3GPP: 子带全双工, 预编码资源块组, 时域单元, 下行链路, 大小, SBFD, subband full duplex, PRG, symbol, slot, DL, down link, size

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | HUAWEI et al. "Discussion on potential enhancement on subband non-overlapping full duplex" *3GPP TSG RAN WG1 Meeting#112, R1-2300087*, 17 February 2023 (2023-02-17), full text, section 2.2.2 | 1-47 |
| A | XIAOMI. "R1-2300574, Discussion on subband non-overlapping full duplex" *3GPP TSG RAN WG1 Meeting#112, R1-2300574*, 17 February 2023 (2023-02-17), entire document | 1-47 |
| A | CN 114830571 A (QUALCOMM INC.) 29 July 2022 (2022-07-29) entire document | 1-47 |
| A | CN 108631836 A (HUAWEI TECHNOLOGIES CO., LTD.) 09 October 2018 (2018-10-09) entire document | 1-47 |
| A | US 2023073130 A1 (APPLE INC.) 09 March 2023 (2023-03-09) entire document | 1-47 |

☐ Further documents are listed in the continuation of Box C.　　☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **24 November 2023** | **05 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/091184**

| Patent document cited in search report | | | Publication date (day/month/year) | Patent family member(s) | | | Publication date (day/month/year) |
|---|---|---|---|---|---|---|---|
| CN | 114830571 | A | 29 July 2022 | WO | 2021133974 | A1 | 01 July 2021 |
| | | | | EP | 4082139 | A1 | 02 November 2022 |
| CN | 108631836 | A | 09 October 2018 | | None | | |
| US | 2023073130 | A1 | 09 March 2023 | KR | 20230033629 | A | 08 March 2023 |
| | | | | US | 2023071357 | A1 | 09 March 2023 |
| | | | | EP | 4145758 | A1 | 08 March 2023 |
| | | | | US | 2023092041 | A1 | 23 March 2023 |
| | | | | KR | 20230033630 | A | 08 March 2023 |
| | | | | EP | 4145749 | A1 | 08 March 2023 |
| | | | | KR | 20230033631 | A | 08 March 2023 |
| | | | | EP | 4145944 | A1 | 08 March 2023 |

Form PCT/ISA/210 (patent family annex) (July 2022)